(19) Europäisches Patentamt
European Patent Office
Office européen des brevets

(11) **EP 3 391 329 B1**

(12) **EUROPÄISCHE PATENTSCHRIFT**

(45) Veröffentlichungstag und Bekanntmachung des Hinweises auf die Patenterteilung:
**18.09.2019 Patentblatt 2019/38**

(21) Anmeldenummer: **16806038.2**

(22) Anmeldetag: **01.12.2016**

(51) Int Cl.:
**G06T 3/40** (2006.01)    **G06T 5/00** (2006.01)
**G06T 5/20** (2006.01)

(86) Internationale Anmeldenummer:
**PCT/EP2016/079463**

(87) Internationale Veröffentlichungsnummer:
**WO 2017/102361 (22.06.2017 Gazette 2017/25)**

(54) **BESTIMMUNG VON HELLIGKEITSWERTEN VIRTUELLER PIXEL**

DETERMINATION OF BRIGHTNESS VALUES OF VIRTUAL PIXELS

DÉTERMINATION DE VALEURS DE LUMINOSITÉ DES PIXELS VIRTUELS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2015 DE 102015121823**
**14.07.2016 DE 102016113010**

(43) Veröffentlichungstag der Anmeldung:
**24.10.2018 Patentblatt 2018/43**

(73) Patentinhaber: **Basler AG**
**22926 Ahrensburg (DE)**

(72) Erfinder: **KUNZE, Jörg**
**22926 Ahrensburg (DE)**

(74) Vertreter: **Eisenführ Speiser**
**Patentanwälte Rechtsanwälte PartGmbB**
**Johannes-Brahms-Platz 1**
**20355 Hamburg (DE)**

(56) Entgegenhaltungen:
**EP-A1- 0 969 443    EP-A2- 0 532 221**
**EP-A2- 0 710 925**

**Beschreibung**

Die Erfindung betrifft eine Bildverarbeitungseinrichtung zum Verarbeiten von Bilddaten eines Bildsensors mit einer regelmäßigen Anordnung von ersten Pixeln sowie eine Digitalkamera, die einen Bildsensor und die Bildverarbeitungseinrichtung umfasst. Die Erfindung betrifft ferner ein entsprechendes Bildverarbeitungsverfahren sowie eine Computervorrichtung und ein Computerprogram-Produkt.

HINTERGRUND DER ERFINDUNG

Es gibt im industriellen Umfeld und in artverwandten Einsatzgebieten, wie etwa in der Verkehrsüberwachung oder in der Medizintechnik, eine Vielzahl verschiedener Anwendungen digitaler Kameras, die sich zumeist hinsichtlich ihrer Anforderungen an die Kameras unterscheiden. So benötigen beispielsweise in der Verkehrsüberwachung Kameras vorrangig eine hohe horizontale Auflösung, die auf einer entsprechenden Anzahl von Fahrspuren das Lesen von Nummernschildern ermöglicht. In der automatisierten Prüfung von z.B. Bremsscheiben wird dagegen eine andere Auflösung benötigt, die das Kontrollieren bestimmter Prüfmaße mit einer vorgegebenen Genauigkeit ermöglicht.

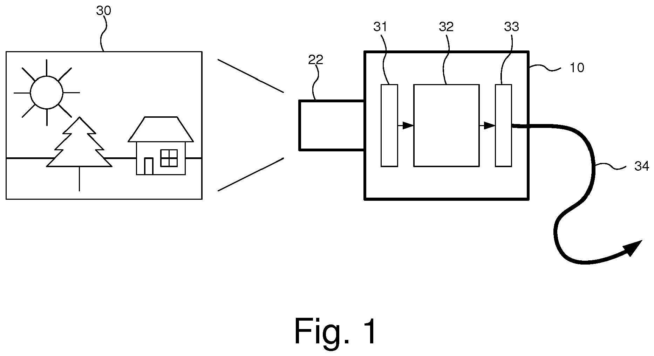

Fig. 1 zeigt schematisch und exemplarisch den Aufbau einer Digitalkamera 10 mit einem Objektiv 22. Eine Bildszene 30 wird über das Objektiv 22 auf einen Bildsensor 31 abgebildet, welcher eine regelmäßige Anordnung lichtempfindlicher Elemente, sogenannter Pixel, aufweist. Der Bildsensor 31 übermittelt elektronische Daten an eine zumeist in der Kamera 10 befindliche Recheneinheit 32, die beispielsweise einen Prozessor, einen digitalen Signalprozessor (DSP) oder ein sogenanntes Field-Programmable-Gate-Array (FPGA) umfasst. Es kann dabei erforderlich sein, analoge Bilddaten in digitale Bilddaten, z.B. mittels eines Analog-Digital-Konverters (in der Figur nicht gezeigt), zu konvertieren. In der Recheneinheit 32 werden ggf. noch gewünschte mathematische Operationen, beispielsweise eine Farbkorrektur oder eine Umrechnung in ein anderes Bildformat, auf den Bilddaten ausgeführt bevor diese anschließend über eine Schnittstelle (Interface) 33 als elektronisches Signal 34 ausgegeben werden.

Die vorstehend genannten, unterschiedlichen Anforderungen an digitale Kameras werden seitens der Kamerahersteller in der Regel mit einer großen Vielzahl verschiedener Kameramodelle adressiert. Das Bereitstellen einer solchen Vielzahl von Kameravarianten erfordert einen hohen organisatorischen und finanziellen Aufwand, u.a. in der Entwicklung, der Produktion, dem Marketing, dem Vertrieb und der Logistik. Daher wäre es wünschenswert, die Variantenvielfalt an Kameras oder an den Hard- und Softwaremodulen, aus denen sie zusammengestellt werden, reduzieren zu können.

Schaut man sich die Variantenbildung digitaler Kameras näher an, so zeigt sich, dass insbesondere die große Anzahl der verschiedenen benötigten Typen von Bildsensoren die Variantenvielfalt aufbläht. Es wäre daher wünschenswert, die verschiedenen Anforderungen an digitale Kameras mit weniger Typen von Bildsensoren erfüllen zu können. Besonders wichtige Unterscheidungsmerkmale sind in diesem Zusammenhang die Größe und die Anzahl der Pixel eines Bildsensors, wobei sich aus diesen Kennwerten als weitere wichtige Unterscheidungsmerkmale die physikalische Größe des Sensors bzw. seiner Bilddiagonale ergeben.

Ausgehend von der vorstehend dargestellten Situation hinsichtlich der Variantenvielfalt digitaler Kameras hat sich der Erfinder die Aufgabe gestellt, eine Möglichkeit zu entwickeln, aus einem Bild eines Bildsensors mit einer ersten Pixelgröße ein Bild mit einer zweiten, ggf. frei wählbaren und von der ersten Pixelgröße abweichenden Pixelgröße zu erzeugen, ohne dass dafür ein anderer Bildsensortyp mit der zweiten Pixelgröße erforderlich wäre. Auf diese Weise könnte mit der gleichen Kamerahardware mit demselben Bildsensortyp mehr als eine Anwendung mit mehr als einer Anforderung an die Pixelgröße und -anzahl adressiert werden, wodurch gegebenenfalls zumindest ein Teil der Kosten für die Variantenbildung eingespart und/oder der entsprechende organisatorische Aufwand reduziert werden könnte.

STAND DER TECHNIK

Ein bekanntes Verfahren, in einem Bildsensor mit einer ersten Pixelgröße ein Bild mit einer zweiten Pixelgröße zu erzeugen, wird als "Binning" bezeichnet, wobei man hier in der Regel zwischen 1) Charge Domain Binning, 2) Voltage Domain Binning und 3) Digital Domain Binning unterscheidet. Im erstgenannten Fall werden Ladungspakete, im zweitgenannten Fall Spannungssignale und im drittgenannten Fall digitale Signale von benachbarten oder in räumlicher Nähe angeordneten Pixel vereint, wodurch ein Ladungs-, Spannungs- oder Digitalwert erhalten wird, der das Signal eines sogenannten "Superpixels" mit einer zweiten Pixelgröße repräsentiert. Solche Binning-Verfahren werden z.B. in der europäischen Patentschrift EP 0 940 029 oder in der US-Patentschrift US 6,462,779 detailliert beschrieben.

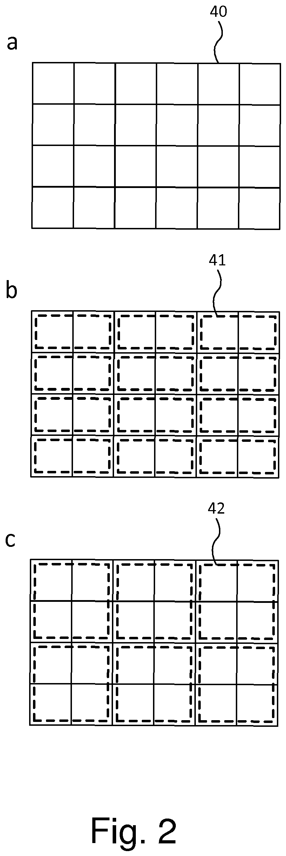

Fig. 2 zeigt schematisch und exemplarisch zwei verschiedene Binning-Vorgänge. Fig. 2 (a) zeigt einen Bildsensor mit einer regelmäßigen Anordnung von Pixeln 40 mit einer ersten Pixelgröße. Fig. 2 (b) zeigt eine Anordnung von durch Binning horizontal benachbarter Pixel entstandener Superpixel 41, die doppelt so breit und gleich hoch sind wie die Pixel 40. Ein solches Binning wird in der Literatur auch als 2x1-Binning bezeichnet. Fig. 2 (c) zeigt eine Anordnung von durch Binning horizontal und vertikal benachbarter Pixel entstandener Superpixel 42, die doppelt so hoch und doppelt so breit sind wie die Pixel 40. Ein solches Binning bezeichnet man auch als 2x2-Binning. Die in Fig. 2 (a) bis (c) erkennbaren Zwischenräume zwischen den Superpixeln 41 dienen nur der besseren Erkennbarkeit ihrer Umrisse in der Darstellung und sind real nicht vorhanden.

Generell lassen sich durch Binning Superpixel erzeugen, deren Seitenlängen jeweils ein ganzzahliges Vielfaches der Seitenlängen der ersten Pixel beträgt. Es kann jedoch auch eine zweite Pixelgröße erwünscht sein, deren Seitenlängen ein nicht ganzzahliges, beispielsweise ein rationales Vielfaches der Seitenlängen der ersten Pixel betragen. Ein solches Seitenverhältnis kann durch Binning-Verfahren bisher nicht realisiert werden.

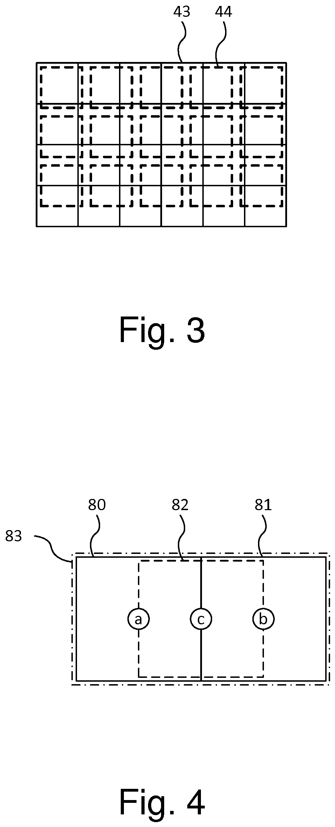

Ein Beispiel für ein nicht ganzzahliges, rationales Vielfaches der Seitenlängen der zweiten Pixel im Verhältnis zu den Seitenlängen der ersten Pixel ist schematisch und exemplarisch in Fig. 3 gezeigt. Dort haben die zweiten Pixel 44 Seitenlängen von 6/5 der Seitenlängen der ersten Pixel 43. Auch hier sind die erkennbaren Zwischenräume zwischen den zweiten Pixeln 44 nicht real vorhanden und dienen nur der besseren Erkennbarkeit ihrer Umrisse in der Darstellung.

Ein weiterer Nachteil von Charge Domain Binning besteht darin, dass es sich nur in solchen Bildsensoren realisieren lässt, in denen dies aufgrund der Bauart möglich ist, beispielsweise bei einer Vielzahl von CCD-Sensoren, aber nicht in solchen Bildsensoren, in denen es bauartbedingt nicht möglich ist, beispielsweise bei zahlreichen CMOS-Sensoren.

Neben den bekannten Binning-Techniken sind noch Verfahren bekannt, bei denen die Auflösung eines Bildes durch Interpolation geändert wird, wie dies z.B. in den US-Patentschriften US 7,567,723 und US 7,286,721 ausführlich beschrieben wird. Allgemein bekannte Interpolationsverfahren sind beispielsweise die sogenannte "Nearest Neighbor"-Interpolation, die bilineare Interpolation sowie die bikubische Interpolation (siehe z.B. Fig. 4 der US 7,567,723).

All diese Interpolationsverfahren basieren auf der modelhaften Annahme, dass der Helligkeitswert eines Pixels jeweils in einem Punkt vorliegt. Zur Interpolation verwenden sie dann Funktionen, die die Helligkeitswerte an den punktförmigen Stellen der ersten Pixel annehmen, und ermitteln die Helligkeitswerte der zweiten Pixel jeweils an einer punktförmigen Stelle dieser Funktion. Dieser Vorgang wird z.B. in Fig. 4 der US 7,567,723 gut verständlich bildlich dargestellt.

EP 0 710 925 A2 offenbart horizontal und vertikal voneinander unabhängige Interpolation von Video-Frames, z.B. Herunterskalieren, auch in nicht-ganzzahligen Verhältnissen. Es kommen lokale Filter mit gewichteter Mittelwertbildung zum Einsatz, z.B. mit geradzahliger Filterlänge. EP 0 532 221 A2 betrifft nicht-ganzzahlige Skalierung von IR-Bildern. Es werden lokale Filter mit gewichteter Mittelwertbildung verwendet, deren Filterkoeffizienten in einem Speicher abgelegt sind.

EP 0 969 443 A1 offenbart eine nicht-ganzzahlige Skalierung von Bildern mit flächenbasierter Gewichtung. Auch hier werden die Filterkoeffizienten gespeichert. Mit den bekannten Interpolationsverfahren lässt sich die Auflösung der Bilddaten eines Bildsensors ändern. Der Erfinder hat jedoch erkannt, dass die so in ihrer Auflösung veränderten Bilddaten in ihren Eigenschaften nicht den Bilddaten entsprechen, die von einem Bildsensor mit einer entsprechend veränderten Pixelgröße und -anzahl zu erwarten wären. Die Interpolation liefert sozusagen einen Helligkeitswert eines virtuellen Ausgangspixels (zweiten Pixels) an einer anderen Stelle als die Eingangspixel (erste Pixel), die das Eingangsbild bilden. Die Interpolation führt nach der Erkenntnis des Erfinders jedoch grundsätzlich nicht zu einen Ergebnis, dass einer Erzeugung von Bilddaten mit einem hinsichtlich Pixelgröße und -anzahl entsprechend dimensionierten Bildsensor entspricht, und ist zudem oftmals abhängig von der Position des virtuellen zweiten Pixels zwischen den ersten Pixeln.

ZUSAMMENFASSUNG DER ERFINDUNG

Der Erfindung liegt die Aufgabe zugrunde, eine Bildverarbeitungseinrichtung zum Verarbeiten von Bilddaten eines Bildsensors mit einer regelmäßigen Anordnung von ersten Pixeln bereitzustellen, wobei die Bildverarbeitungseinrichtung es ermöglicht, für zwei oder mehr virtuelle zweite Pixel an unterschiedlichen Zwischenpositionen zwischen den ersten Pixeln jeweils einen Helligkeitswert zu bestimmen, wobei die virtuellen zweiten Pixel in ihren Eigenschaften im Vergleich zu den Ergebnissen der bekannten Interpolationsverfahren besser dem entsprechen, was von "echten" Pixeln zu erwarten wäre.

Die Aufgabe wird gelöst durch die Gegenstände der unabhängigen Ansprüche 1 und 13 - 15.

Gemäß einem ersten Aspekt der Erfindung wird eine Bildverarbeitungseinrichtung zum Verarbeiten von Bilddaten eines Bildsensors mit einer regelmäßigen Anordnung von ersten Pixeln bereitgestellt, wobei die Bildverarbeitungseinrichtung ausgebildet ist, für zwei oder mehr virtuelle zweite Pixel gleicher Größe an unterschiedlichen Zwischenpositionen zwischen den ersten Pixeln jeweils einen Helligkeitswert zu bestimmen, wobei die Bestimmung des jeweiligen Helligkeitswertes eine Interpolation der Pixel einer mehrere der ersten Pixel umfassenden Nachbarschaftsumgebung der jeweiligen Zwischenposition mittels eines zugehörigen lokalen Filters umfasst, wobei jeder der lokalen Filter eine Mehrzahl von Filterkoeffizienten umfasst, wobei für zumindest einen der lokalen Filter mehr als einer der Filterkoeffizienten ungleich Null ist, und wobei die Summe der Quadrate der Filterkoeffizienten für jeden der lokalen Filter gleich einem konstanten Wert ist, der gemäß einer ersten Bedingung für alle lokalen Filter gleich ist.

Der Erfindung liegt die Erkenntnis des Erfinders zugrunde, dass durch die bekannten Interpolationsverfahren in ihrer Auflösung veränderte Bilddaten in ihren Eigenschaften nicht den Bilddaten entsprechen, die von einem Bildsensor mit einer entsprechend veränderten Pixelgröße und -anzahl zu erwarten wären. Wie genau sich Pixel einer anderen Größe verhalten, wird im Folgenden anhand des Modells eines Pixels aus dem Standard 1288 der European Machine Vision Association, dem sogenanntem EMVA-Standard 1288 (Release 3.0 vom 29. November 2010) beschrieben. Dieses Pixelmodell ist linear und führt zu dem im Standard beschriebenen Zusammenhang zwischen dem Signal des Pixels und seinem Rauschen. Basierend auf der Annahme, dass alle Helligkeitswerte der vom dem Bildsensor erzeugten Bilddaten von ersten Pixeln stammen, die diesem Pixelmodell genügen, sollten auch alle Helligkeitswerte der virtuellen zweiten Pixel diesem Standard genügen und einen entsprechenden Zusammenhang zwischen Signal und Rauschen aufweisen.

Fig. 4 zeigt schematisch und exemplarisch die Auswirkung einer bekannten Interpolation auf die Eigenschaften eines Pixels. Dazu wird aus einem linken Eingangspixel 80 mit einem Signalwert a und einem rechten Eingangspixel 81 mit einem Signalwert b als Ergebnis ein Signalwert c bestimmt für ein Ausgangspixel 82, dessen Position sich genau in der Mitte zwischen den Eingangspixeln 80 und 81 befindet. Die in Fig. 4 dargestellten leichten Abweichungen in der Höhe der Pixel 80, 81, 82 und 83 sind nicht real vorhanden und dienen nur der besseren Erkennbarkeit ihrer Umrisse in der Darstellung. Das heißt, entgegen der Darstellung in Fig. 4 weisen die Pixel 80, 81, 82 und 83 eine identische vertikale Ausdehnung auf.

Wird für den gezeigten Fall eine lineare Interpolation eigenständig oder als Teilschritt einer bilinearen Interpolation durchgeführt, so lautet die Formel zur Berechnung des Signalwertes c:

$$c = 1/2 * (a + b).$$

Dies ist die bekannte Formel einer Mittelwertbildung. Diese Formel gibt fast schon im Klartext an, was physikalisch bei der linearen Interpolation passiert. Durch die Addition a + b der Signalwerte der Pixel 80 und 81 wird der Signalwert eines Superpixels 83 gebildet, dessen Fläche die Flächen der Pixel 80 und 81 umfasst und der somit eine doppelt so große Fläche aufweist wie die Eingangspixel. Der Signalwert dieses doppelt so großen Superpixels 83 wird mit dem Verstärkungsfaktor 1/2 multipliziert, so dass eine korrekte Helligkeit erhalten wird. Die lineare Interpolation führt in dem gezeigten Fall also dazu, dass das Ausgangspixel im Vergleich mit den Eingangspixeln eine doppelt so große Fläche und einen halb so großen Verstärkungsfaktor aufweist.

Gleiche oder ähnliche Effekte zeigen sich bei der linearen oder bilinearen Interpolation auch für andere Positionen von Ausgangspixeln. Weiterhin zeigen sich gleiche oder ähnliche Effekte auch bei der Verwendung anderer Verfahren zur Interpolation, beispielsweise bei einer kubischen oder bikubischen Interpolation sowie bei einer Spline-Interpolation.

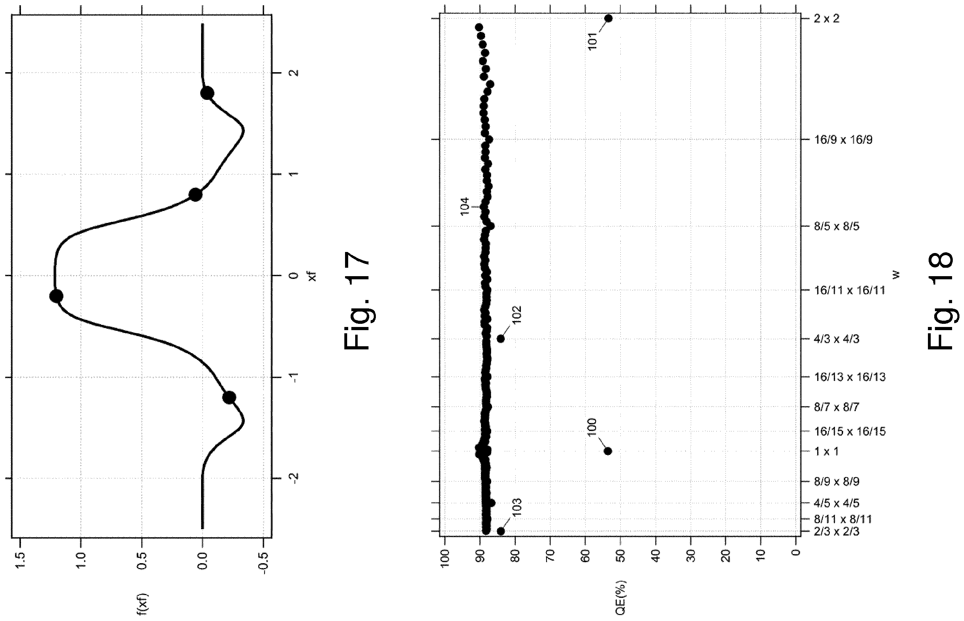

Werden nun Bilddaten aus Ausgangspixeln, deren Werte mit einem der bekannten Interpolationsverfahren ermittelt wurden, mittels den Methoden des EMVA-Standards 1288 unter Angabe der Größe der Ausgangspixel untersucht, so erhält man Ergebnisse, die physikalisch nicht sinnvoll sind. Beispielsweise steigt durch die Interpolation der ermittelte Wert für die Quanteneffizienz deutlich an (vgl. auch Fig. 18 und die zugehörigen Erläuterungen am Ende der Beschreibung). Dies ist unglaubwürdig, da auch bei einer Interpolation der Anteil der Photonen, die in Photoelektronen überführt werden, an der Gesamtzahl der einfallenden Photonen gleichbleibt. Der beobachtete Anstieg des Messwertes resultiert jedoch aus der Tatsache, dass durch die Interpolation eine räumlich ungleichmäßig verteilte Veränderung der Pixelgröße vorgenommen wird und dass die größeren Ausgangspixel tatsächlich Photoelektronen über eine größere Fläche einsammeln als zur Berechnung angenommen.

Die Veränderung der Pixelgröße durch bekannte Interpolationsverfahren hat unmittelbare Auswirkungen auch auf die Bildqualität. Betrachter beschreiben interpolierte Bilder häufig als unschärfer als ihre Originale. Eine plausible Erklärung liefert die Erkenntnis, dass Pixel dadurch, dass sie die Photoelektronen über eine definierte Fläche integrieren, eine räumliche Tiefpasswirkung entfalten. Diese lässt sich aus der MTF-Kurve (engl. "Modulation Transfer Function") ablesen und folgt den Gesetzmäßigkeiten, die in James R. Janesick, "Scientific Charge-Coupled Devices", Bellingham 2001, Kapitel 4.2.2, beschrieben sind. Wird nun beispielsweise die Pixelfläche vergrößert, so ändert sich die räumliche Tiefpasswirkung dahingehend, dass die Verstärkung für hohe Raumfrequenzen absinkt. Dadurch sinkt auch die Bildenergie, die hier als Integral über das Betragsquadrat der räumlichen Frequenzen verstanden wird.

Diese Erkenntnis wurde durch Anwendung einer Interpolation auf künstlich erzeugte Rauschbilder überprüft. Bilder, die ausschließlich aus weißem Rauschen bestehen, haben den Vorteil, dass in ihnen alle Frequenzen mit gleicher Amplitude vorhanden sind und dass an ihnen die Wirkung von mathematischen Operationen auf die räumliche Frequenzverteilung und somit auf die Bildenergie gut untersucht werden kann.

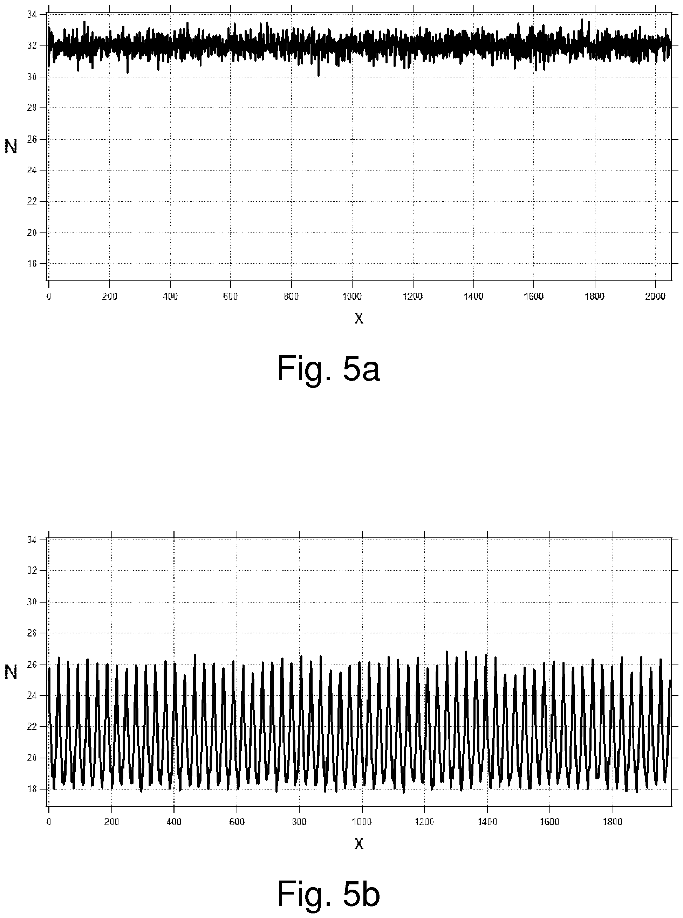

Fig. 5 zeigt schematisch und exemplarisch die Ergebnisse eines solchen Experimentes. Es wurde ein künstlich erzeugtes erstes Bild der Größe 2048 x 2048 Pixel (erste Pixel) mit einem gaußverteilten weißen Rauschen mit einer Standardabweichung von 32 digitalen Werten (DN) erzeugt. Dann wurde das spaltenweise Rauschen N als Standardabweichung ermittelt und in Fig. 5 (a) über der horizontalen Position x aufgetragen. Es zeigt sich erwartungsgemäß, dass der Graph im Rahmen der zu erwartenden Schwankungsbreite etwa einen Durchschnittswert von 32 DN annimmt und somit den theoretischen Wert korrekt trifft.

Zum Vergleich wurde aus dem ersten Bild mit einer bilinearen Interpolation ein zweites Bild mit einer Auflösung von 31/32 des Originalbildes erzeugt, also mit einer Auflösung von 1984 x 1984 Pixeln (zweite Pixel). Als reine Interpolation ohne Berücksichtigung der Veränderung der Pixelgröße sollte sich bei Erhalt der Bildenergie weiterhin eine Standardabweichung von 32 ergeben. Es zeigt sich jedoch ein deutliches Absinken des Rauschens auf Werte, die periodisch zwischen etwa 18 DN und 26 DN oszillieren. Das Absinken des Rauschens spricht für ein entsprechendes Absinken der Bildenergie, welches vom Betrachter als Verlust von Bildschärfe nachteilig empfunden wird. Dieses Absinken weist eine räumliche Periodizität auf, die sich bei weiterer mathematischer Analyse des Bildes, z.B., gemäß dem EMVA-Standard 1288, als störend darstellt.

Dieses Verhalten der bilinearen Interpolation wurde durch Tests mit realen Kameras verifiziert. Dabei wurde festgestellt, dass die Änderung des Rauschens durch die Interpolation eine Vermessung der Kamera nach dem EMVA-Standard 1288 stark behindert oder sogar unmöglich macht, woraus sich ein zusätzlicher schwerwiegender Nachteil ergibt.

In Anbetracht dieser Nachteile wird gemäß der Erfindung vorgeschlagen, dass für zwei oder mehr virtuelle zweite Pixel gleicher Größe an unterschiedlichen Zwischenpositionen zwischen den ersten Pixeln die Bestimmung des jeweiligen Helligkeitswertes eine Interpolation der Pixel einer mehrere der ersten Pixel umfassenden Nachbarschaftsumgebung der jeweiligen Zwischenposition mittels eines zugehörigen lokalen Filters umfasst, wobei jeder der lokalen Filter eine Mehrzahl von Filterkoeffizienten umfasst, wobei für zumindest einen der lokalen Filter mehr als einer der Filterkoeffizienten ungleich Null ist, und wobei die Summe der Quadrate der Filterkoeffizienten für jeden der lokalen Filter gleich einem konstanten Wert ist, der gemäß einer ersten Bedingung für alle lokalen Filter gleich ist. Durch die Wahl von Filterkoeffizienten, die diese Bedingung erfüllen, ist es möglich durch die Interpolation die Helligkeitswerte für die virtuellen zweiten Pixel so zu bestimmen, dass die virtuellen zweiten Pixel in ihren Eigenschaften im Vergleich zu den Ergebnissen der bekannten Interpolationsverfahren besser dem entsprechen, was von "echten" Pixeln zu erwarten wäre, da nämlich die Übertragung des Rauschens räumlich homogen erfolgt. Auf diese kann Weise beispielsweise eine periodische Änderung des Rauschens, wie sie vorstehend beschrieben wurde, vermieden werden.

Die lokalen Filter sind bevorzugt lineare Filter. Da die virtuellen zweiten Pixel einem linearen Pixelmodell gemäß dem EMVA-Standard 1288 möglichst gut genügen sollen, wird die Interpolation unter der Annahme, dass auch alle ersten Pixel dem linearen Pixelmodell gemäß dem EMVA-Standard 1288 genügen, vorzugsweise durch eine mathematische Operation bewerkstelligt, die selbst auch linear ist und sich darüber hinaus als Filterung formulieren lässt. Diese lineare Filterung wird für jede der unterschiedlichen Zwischenpositionen durch einen zugehörigen lokalen Filter mit einer Mehrzahl von Filterkoeffizienten realisiert. Da für zumindest einen der lokalen Filter mehr als einer der Filterkoeffizienten ungleich Null ist, kann eine "echte" Interpolation realisiert werden, bei der der Helligkeitswert des virtuellen zweiten Pixels auf Basis mehr als eines der ersten Pixel bestimmt wird. In Abhängigkeit von der Lage der unterschiedlichen Zwischenpositionen und/oder der Größe der virtuellen zweiten Pixel können auch für mehr als einen der lokalen Filter, gegebenenfalls auch für jeden der lokalen Filter, mehr als einer der Filterkoeffizienten ungleich Null sein. Dabei ist der Begriff "Zwischenposition" hier so zu verstehen, dass damit auch eine Position bezeichnet sein kann, die mit der Position eines der ersten Pixel zusammenfällt.

Der Begriff "lokal" zeigt hier an, dass die bei der Interpolation verwendeten Filter eine endliche Filtergröße aufweisen. Nur mit einem Filter mit einer endlichen, d.h., beschränkten, Größe lässt sich mit endlicher Rechenzeit und/oder endlichem Ressourcenaufwand ein Ergebnis erzielen. Die lokalen Filter werden auf die Nachbarschaftsumgebung der jeweiligen Zwischenposition, die jeweils mehrere der ersten Pixel umfasst, angewandt.

Je nachdem ob mit Hilfe der erfindungsgemäßen Interpolation eine Verringerung oder eine Vergrößerung der Auflösung der Bilddaten des Bildsensors erreicht werden soll, können abhängig von der Position in den Bilddaten und der gewünschten Stärke der Änderung eine oder mehrere der unterschiedlichen Zwischenpositionen zwischen unmittelbar benachbarten ersten Pixeln liegen.

Die Wirkung der lokalen Filter auf das Rauschen lässt sich mit Hilfe des Gaußschen Fehlerfortpflanzungsgesetzes erklären, welches die Fortpflanzung von Unsicherheiten bei voneinander unabhängigen fehlerbehafteten Größen beschreibt. Indem der Erfinder dieses Gesetz auf die lineare Filterung anwendet, kommt er zu der erfindungsgemäßen Erkenntnis, dass die Übertragung des Rauschens eben gerade dann räumlich homogen erfolgt, wenn für jeden der lokalen Filter die Summe der Quadrate der Filterkoeffizienten einem gleichen konstanten Wert entspricht (erste Bedingung).

Gemäß einer vorteilhaften Weiterbildung entspricht der konstante Wert gemäß einer zweiten Bedingung dem Quadrat einer Rauschverstärkung, wobei die Rauschverstärkung dem Produkt eines vorgegebenen Gains der virtuellen zweiten Pixel relativ zu einem Gain der ersten Pixel und dem Kehrwert der Wurzel einer vorgegebenen relativen Pixelgröße entspricht, wobei die relative Pixelgröße dem Verhältnis der Größe der virtuellen zweiten Pixel zu der Größe der ersten Pixel entspricht. Bei Erfüllung der zweiten Bedingung erfolgt die Übertragung des Rauschens nicht nur räumlich homogen, sondern der Verstärkungswert für die Übertragung des Rauschens entspricht auch der gewünschten Größe der Ausgangspixel (zweite Pixel). Der Begriff "Verstärkung" ist in diesem Zusammenhang so zu verstehen, dass er auch eine Abschwächung des Rauschens, d.h., eine Änderung des Rauschens um einen Faktor kleiner 1, oder ein Gleichbleiben des Rauschens (Faktor gleich 1) bedeuten kann.

Die zweite Bedingung kann wie folgt erläutert werden: Gemäß dem Pixelmodell des EMVA-Standards 1288 folgt die Photonen- und Photoelektronenstatistik jeweils einer Poissonverteilung. Wird nun die Größe eines Pixels um einen Faktor w (relative Pixelgröße) geändert, so steigen die Mittelwerte für die empfangenen Photonen $\mu_p$ und für die Photoelektronen $\mu_e$ unabhängig von einem Gain g um den Faktor w. Da die Mittelwerte $\mu_p$ und $\mu_e$ aufgrund der gegebenen Poissonverteilung gleich den zugehörigen Varianzen $\sigma_p^2$ und $\sigma_e^2$ sind, steigen auch diese um den Faktor w und entsprechend steigt das zugehörige Rauschen um die Wurzel aus w. Wird darauf nun der Gain der Eingangspixel (erste Pixel) und zusätzlich ein vorgegebener Gain g (siehe auch nachstehend) angewandt, so erhält man die Aussage, dass das Ausgangsrauschen gemessen in DN mit einem Faktor R (Rauschverstärkung) gleich g mal der Wurzel von w steigen sollte. Der Begriff "relative Pixelgröße" ist hier so zu verstehen, dass sie eine Änderung der Fläche der virtuellen zweiten Pixel relativ zu der Fläche der ersten Pixel beschreibt. Sind beispielsweise die virtuellen zweiten Pixel sowohl in der Breite als auch in der Höhe 1,5 mal so groß wie die ersten Pixel ergibt sich die relative Pixelgröße w zu 1,5 x 1,5 gleich 2,25, d.h., die Fläche der virtuellen zweiten Pixel ist jeweils um einen Faktor w gleich 2,25 im Vergleich zu der Fläche eines jeweiligen ersten Pixels vergrößert.

Gemäß einer weiteren vorteilhaften Weiterbildung erfüllen die Filterkoeffizienten für jeden der lokalen Filter zusätzlich eine dritte Bedingung, dass die Summe der Filterkoeffizienten gleich dem vorgegebenen Gain ist. Über den Gain der lokalen Filter kann eine gewünschte Ausgangshelligkeit im Verhältnis zur Eingangshelligkeit festgesetzt werden. Beispielsweise kann gewünscht sein, dass die virtuellen zweiten Pixel einen gleichen Conversion Gain K gemäß dem EMVA-Standard 1288 aufweisen wie die ersten Pixel. In diesem Fall wäre der Gain so zu wählen, dass er der relativen Pixelgröße entspricht. Es kann aber beispielsweise auch gewünscht sein, dass das Ausgangsbild (virtuelle zweite Pixel) eine gleiche Helligkeit gemessen in DN aufweist wie das Eingangsbild (erste Pixel). In diesem Fall wäre der Gain gleich 1 zu wählen.

Gemäß einer weiteren vorteilhaften Weiterbildung erfüllen die Filterkoeffizienten für jeden der lokalen Filter zusätzlich eine vierte Bedingung, dass der Schwerpunkt der Filterkoeffizienten der zugehörigen Zwischenposition entspricht. Da die Zwischenpositionen jeweils den Mittelpunkten der virtuellen zweiten Pixel entsprechen, lassen sich auf diese Weise Geometrieverzerrungen vermeiden, die andernfalls bei der Interpolation entstehen könnten. Eine solche Geometrieverzerrung wäre z.B., dass eine gerade Kante aus dem Eingangsbild im Ausgangsbild nicht mehr als gerade Kante erkennbar ist sondern beispielsweise ein störendes Wellenmuster aufweist.

Gemäß noch einer weiteren vorteilhaften Weiterbildung ist für jeden der lokalen Filter die Größe des lokalen Filters so gewählt, dass das jeweilige virtuelle zweite Pixel bei der Interpolation vollständig innerhalb des lokalen Filters gelegen ist. Dadurch gehen alle Photonen, die auf der Fläche des jeweiligen virtuellen zweiten Pixels detektiert werden, auch in die Berechnung des Helligkeitswertes des virtuellen zweiten Pixels ein und es gibt keinen Teil der Fläche des virtuellen zweiten Pixels, in dem einfallende Photonen sozusagen verloren gehen, da sie außerhalb der Umgebung und somit außerhalb des Wirkungsbereiches des lokalen Filters nicht berücksichtig werden können.

Gemäß noch einer weiteren vorteilhaften Weiterbildung ist die Interpolation jeweils eine ein-dimensionale Interpolation, wobei jeder der lokalen Filter ein ein-dimensionaler lokaler Filter ist mittels dessen die ein-dimensionale Interpolation ausgeführt wird. In diesem Fall kann die Auflösung der Bilddaten durch die Interpolation einfach und effizient in einer Dimension, z.B., in der Breite oder in der Höhe, verändert werden.

Gemäß noch einer weiteren vorteilhaften Weiterbildung ist die Interpolation jeweils eine zwei-dimensionale Interpolation, wobei jeder der lokalen Filter ein zwei-dimensionaler lokaler Filter ist mittels dessen die zwei-dimensionale Interpolation ausgeführt wird, oder wobei jeder der lokalen Filter dem dyadischen Produkt von zwei ein-dimensionalen lokalen Filtern entspricht mittels derer die zwei-dimensionale Interpolation als zwei hintereinander ausgeführte ein-dimensionale Interpolationen ausgeführt wird. In diesem Fall kann die Auflösung der Bilddaten durch die Interpolation in zwei Dimensionen, z.B., in der Breite und in der Höhe, verändert werden. Durch die Realisierung der jeweiligen lokalen Filter als jeweils zwei ein-dimensionale lokale Filter, die hintereinander ausgeführt werden, ergibt sich dabei eine einfache und sehr effiziente Implementierung.

Gemäß noch einer weiteren vorteilhaften Weiterbildung ist die Größe des zwei-dimensionalen lokalen Filters in den zwei Dimensionen gleich, oder ist die Größe der zwei ein-dimensionalen Filter in der jeweils einen Dimension gleich. Mit solchen lokalen Filtern, die z.B. in der Breite und in der Höhe gleich groß sind, lassen sich störende Anisotropieeffekte vermeiden.

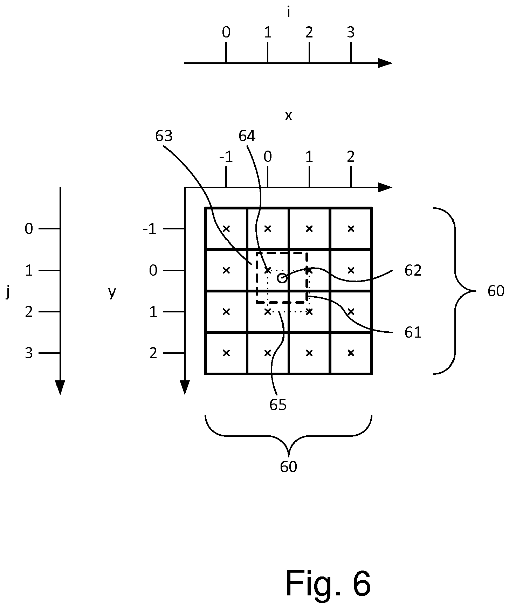

Gemäß noch einer weiteren vorteilhaften Weiterbildung weisen der ein-dimensionale lokale Filter oder die zwei ein-dimensionalen lokalen Filter eine geradzahlige Größe in der jeweils einen Dimension auf, oder weist der zwei-dimensionale Filter eine geradzahlige Größe in jeder der zwei Dimensionen auf. Wird die Umgebung so gewählt, dass der Mittelpunkt eines virtuellen zweiten Pixels gemäß Fig. 6 die Koordinate $0 \leq x < 1$ und $0 \leq y < 1$ aufweist, so weisen jeweils genauso viele Mittelpunkte der ersten Pixel 64 einen x-Wert kleiner oder gleich dem x-Wert des zweiten Pixelmittelpunktes 62 auf, wie Pixelmittelpunkte einen x-Wert größer als der x-Wert des zweiten Pixelmittelpunktes aufweisen und es weisen jeweils genauso viele erste Pixelmittelpunkte einen y-Wert kleiner oder gleich dem y-Wert des zweiten Pixelmittelpunktes auf, wie Pixelmittelpunkte einen y-Wert größer als der y-Wert des zweiten Pixelmittelpunktes aufweisen. Dadurch ergibt sich eine symmetrische Problemstellung, mit der störende Anisotropieeffekte vermieden und der Rechenaufwand klein gehalten werden kann. Oder mit anderen Worten: Dadurch entsteht eine Symmetrie der Umgebung 60 um das Zentralquadrat 65 herum.

Gemäß noch einer weiteren vorteilhaften Weiterbildung ist eine relative Seitenlänge der virtuellen zweiten Pixel, die dem Verhältnis der Länge einer Seite der virtuellen zweiten Pixel zu der Länge einer entsprechenden Seite der ersten Pixel entspricht, kleiner oder gleich 2, wobei für jeden lokalen Filter die Größe des lokalen Filters in einer Dimension in Richtung parallel zu der Seite gleich 4 ist.

Gemäß noch einer weiteren vorteilhaften Weiterbildung umfasst die Bildverarbeitungseinrichtung einen Speicher, in dem die Filterkoeffizienten der lokalen Filter zur Verwendung bei der Interpolation gespeichert sind. Somit brauchen die Filterkoeffizienten nur einmal im Voraus bestimmt und in dem Speicher abgespeichert werden; ein wiederholtes Festlegen der Filterkoeffizienten vor jedem neuen Filtervorgang kann somit entfallen.

Gemäß noch einer weiteren vorteilhaften Weiterbildung umfasst die Bildverarbeitungseinrichtung ein Einstellelement zum Einstellen zumindest der relativen Pixelgröße, z.B. 1,5 x 1,5, wenn die virtuellen zweiten Pixel sowohl in der Breite als auch in der Höhe 1,5 mal so groß sein sollen wie die ersten Pixel, wobei die Bildverarbeitungseinrichtung ausgebildet ist, die Filterkoeffizienten der lokalen Filter basierend auf der eingestellten relativen Pixelgröße festzulegen. Dies führt zu einer großen Flexibilität, da die Filterkoeffizienten nicht im Voraus bestimmt werden müssen, sondern beispielsweise in einer digitalen Kamera, die einen Bildsensor mit einer regelmäßigen Anordnung von ersten Pixeln zur Erzeugung von Bilddaten und die erfindungsgemäße Bildverarbeitungseinrichtung zum Verarbeiten der Bilddaten des Bildsensors umfasst, bei der Konfiguration der digitalen Kamera (oder sogar während des Betriebs) basierend auf der z.B. durch einen Nutzer der digitalen Kamera eingestellten relativen Pixelgröße festgelegt werden können. Zusätzlich zu der relativen Pixelgröße ist bevorzugt auch der Gain der virtuellen zweiten Pixel relativ zu einem Gain der ersten Pixel durch das Einstellelement einstellbar, wobei die Bildverarbeitungseinrichtung dann vorzugsweise ausgebildet ist, die Filterkoeffizienten der lokalen Filter basierend auf der eingestellten relativen Pixelfläche und dem eingestellten Gain festzulegen. Darüber hinaus kann es vorteilhafterweise ebenfalls vorgesehen sein, dass auch die Auflösung des Ausgangsbildes (virtuelle zweite Pixel) über das Einstellelement einstellbar ist. In diesem Fall ergibt sich die Auflösung nicht automatisch aus dem Verhältnis der Größe der virtuellen zweiten Pixel zu der Größe der ersten Pixel, sondern sie kann separat vorgegeben werden. Damit lassen sich Anwendungen realisieren, bei denen die digitale Kamera beispielsweise zunächst mit einer hohen Bildwiederholfrequenz oder mit einer geringen Datenrate Bilder einer niedrigen Auflösung überträgt und nur dann, wenn in den Bildern ein Ereignis detektiert wird, dieselbe Kamera ein hochauflösendes Bild erzeugt, in dem mehr Details, z.B., ein Nummernschild, erkennbar sind. Das Einstellelement kann z.B. ein Regler, wie etwa ein Schieberegler oder ein Drehregler, ein Register, eine digitale Schnittstelle oder dergleichen umfassen.

Gemäß noch einer weiteren vorteilhaften Weiterbildung umfasst das Festlegen der Filterkoeffizienten ein Bestimmen von Filterkoeffizienten entsprechend einer Synthesefunktion, wobei die bestimmten Filterkoeffizienten vorzugsweise die erste und dritte Bedingung erfüllen, sowie ein Korrigieren der bestimmten Filterkoeffizienten oder der Synthesefunktion basierend auf einer zweiten und/oder einer dritten Korrekturfunktion derart, dass korrigierte Filterkoeffizienten erhalten werden, die zusätzlich die zweite Bedingung und/oder die vierte Bedingung erfüllen.

Gemäß einem weiteren Aspekt der Erfindung wird eine Digitalkamera bereitgestellt, wobei die Digitalkamera umfasst:

- einen Bildsensor mit einer regelmäßigen Anordnung von ersten Pixeln zur Erzeugung von Bilddaten; und
- die Bildverarbeitungseinrichtung nach einem der Ansprüche 1 bis 11 zum Verarbeiten der Bilddaten des Bildsensors.

Gemäß einem weiteren Aspekt der Erfindung wird ein Bildverarbeitungsverfahren zum Verarbeiten von Bilddaten eines Bildsensors mit einer regelmäßigen Anordnung von ersten Pixeln bereitgestellt, wobei das Bildverarbeitungsverfahren für zwei oder mehr virtuelle zweite Pixel gleicher Größe an unterschiedlichen Zwischenpositionen zwischen den ersten Pixeln jeweils einen Helligkeitswert bestimmt, wobei die Bestimmung des jeweiligen Helligkeitswertes eine Interpolation der Pixel einer mehrere der ersten Pixel umfassenden Nachbarschaftsumgebung der jeweiligen Zwischenposition mittels eines zugehörigen lokalen Filters umfasst, wobei jeder der lokalen Filter eine Mehrzahl von Filterkoeffizienten umfasst, wobei für zumindest einen der lokalen Filter mehr als einer der Filterkoeffizienten ungleich Null ist, und wobei die Summe der Quadrate der Filterkoeffizienten für jeden der lokalen Filter gleich einem konstanten Wert ist, der gemäß einer ersten Bedingung für alle lokalen Filter gleich ist.

Gemäß einem weiteren Aspekt der Erfindung wird eine Computervorrichtung bereitgestellt, wobei die Computervorrichtung eine Recheneinheit umfasst, die zur Durchführung des Bildverarbeitungsverfahrens nach Anspruch 13 ausgestaltet ist.

Gemäß einem weiteren Aspekt der Erfindung wird ein Computerprogramm-Produkt bereitgestellt, wobei das Computerprogramm-Produkt Codemitteln umfasst zum Veranlassen einer Computervorrichtung zum Ausführen des Bildverarbeitungsverfahrens nach Anspruch 13, wenn das Computerprogramm-Produkt auf der Computervorrichtung ausgeführt wird.

Es versteht sich, dass die Bildverarbeitungseinrichtung nach Anspruch 1, die Digitalkamera nach Anspruch 12, das Bildverarbeitungsverfahren nach Anspruch 13, die Computervorrichtung nach Anspruch 14 und das Computerprogramm-Produkt nach Anspruch 15 ähnliche und/oder identische bevorzugte Ausführungsformen, insbesondere wie in den abhängigen Ansprüchen definiert, haben.

KURZE BESCHREIBUNG DER ZEICHNUNGEN

Bevorzugte Ausführungsformen der Erfindung werden im Folgenden unter Bezugnahme auf die beigefügten Figuren näher beschrieben, wobei

Fig. 1 schematisch und exemplarisch den Aufbau einer Digitalkamera zeigt,

Fig. 2 schematisch und exemplarisch zwei verschiedene Binning-Vorgänge zeigt,

Fig. 3 schematisch und exemplarisch ein Beispiel für ein nicht ganzzahliges, rationales Vielfaches der Seitenlängen der zweiten Pixel im Verhältnis zu den Seitenlängen der ersten Pixel zeigt,

Fig. 4 schematisch und exemplarisch die Auswirkung einer bekannten Interpolation auf die Eigenschaften eines Pixels zeigt,

Fig. 5 schematisch und exemplarisch die Ergebnisse eines Experiments, bei dem eine Interpolation auf künstlich erzeugte Rauschbilder angewandt wurde, zeigt,

Fig. 6 schematisch und exemplarisch eine mehrere der ersten Pixel umfassende Nachbarschaftsumgebung einer Zwischenposition zur Bestimmung des Helligkeitswertes eines virtuellen zweiten Pixels durch Interpolation mittels eines lokalen Filters zeigt,

Fig. 7 schematisch und exemplarisch eine Synthesefunktion für eine lineare Interpolation zeigt,

Fig. 8 schematisch und exemplarisch eine alternative Synthesefunktion für eine kubische Interpolation zeigt,

Fig. 9 schematisch und exemplarisch eine Vorzeichenfunktion als zweite Funktion für eine Korrektur der Position des Schwerpunktes zeigt,

Fig. 10 schematisch und exemplarisch eine einzelne Sinuswelle als zweite Funktion für eine Korrektur der Position des Schwerpunktes zeigt,

Fig. 11 schematisch und exemplarisch eine im Randbereich stetig differenzierbare, räumlich begrenzte Funktion als zweite Funktion für eine Korrektur der Position des Schwerpunktes zeigt,

Fig. 12 schematisch und exemplarisch die Funktion $E1(xf) = \cos(\omega \ast xf) \ast \Theta(3/2 \ast \pi/\omega - |xf|)$ mit $\omega = \pi/2$ zeigt,

Fig. 13 schematisch und exemplarisch die Funktion $E1(xf) = (1/2 \ast \cos(\omega \ast xf) + 1/2 \ast \cos(2\omega \ast xf)) \ast \Theta(\pi/\omega - |xf|)$ mit $\omega = \pi/2$ zeigt,

Fig. 14 schematisch und exemplarisch die Funktion $E1(xf) = 2 \ast \cos^2(\omega \ast xf) \ast \Theta(1/2 \ast \pi/\omega - |xf|) - \cos^2(\omega \ast xf/2) \ast \Theta(\pi/\omega - |xf|)$ mit $\omega = \pi/2$ zeigt,

Fig. 15 schematisch und exemplarisch eine Synthesefunktion zeigt, die für eine relative Pixelgröße von w gleich 1 x 1 alle vier Bedingungen erfüllt,

Fig. 16 schematisch und exemplarisch eine alternative Synthesefunktion zeigt, die für eine relative Pixelgröße von w gleich 5/3 x 5/3 alle vier Bedingungen erfüllt,

Fig. 17 schematisch und exemplarisch eine weitere alternative Synthesefunktion zeigt, die für eine relative Pixelgröße von w gleich 2/3 x 2/3 alle vier Bedingungen erfüllt,

Fig. 18    schematisch und exemplarisch eine Quanteneffizienzkurve in Abhängigkeit von der gewählten Pixelgröße w für eine bikubische Interpolation, ermittelt nach dem EMVA-Standard 1288, zeigt, und

Fig. 19    schematisch und exemplarisch eine Quanteneffizienzkurve in Abhängigkeit von der gewählten Pixelgröße w für die erfindungsgemäße Interpolation, ermittelt nach dem EMVA-Standard 1288, zeigt.

DETAILLIERTE BESCHREIBUNG DER AUSFÜHRUNGSBEISPIELE

In den Figuren sind gleiche bzw. sich entsprechende Elemente oder Einheiten jeweils mit gleichen bzw. sich entsprechenden Bezugszeichen versehen. Wenn ein Element oder eine Einheit bereits im Zusammenhang mit einer Figur beschrieben worden ist, wird ggf. im Zusammenhang mit einer anderen Figur auf eine ausführliche Darstellung verzichtet.

Fig. 6 zeigt schematisch und exemplarisch eine mehrere der ersten Pixel 60 umfassende Nachbarschaftsumgebung einer Zwischenposition 62 zur Bestimmung des Helligkeitswertes eines virtuellen zweiten Pixels 61 durch Interpolation mittels eines lokalen Filters. In dem hier gezeigten Beispiel beträgt die Größe der Nachbarschaftsumgebung 4 x 4 Eingangspixel (erste Pixel) 60 zur Berechnung des Helligkeitswertes des Ausgangspixels (virtuelles zweites Pixel) 61. Dabei ist die Nachbarschaftsumgebung so gewählt, dass die Zwischenposition 62, die dem Mittelpunkt des virtuellen zweiten Pixels 61 entspricht, in einem Zentralquadrat 65 der Nachbarschaftsumgebung gelegen ist. In dem gezeigten Fall werden die Eingangspixel 62 über zwei Zählvariablen i und j indiziert. Die relative Position des Ausgangspixels 61 wird ohne Beschränkung der Allgemeinheit über die beiden Positionswerte x und y in Bezug auf die gewählte Nachbarschaftsumgebung beschrieben. Die Wertebereiche sind hier -1 $\leq$ x $\leq$ 2 und -1 $\leq$ y $\leq$ 2. Dabei wird das erste Pixel 63 als Referenzeingangspixel mit der Position x = 0 und y = 0 gewählt.

Die Größe der Nachbarschaftsumgebung 60 ist gleich der Größe des lokalen Filters. Die Filtergröße ist hier so gewählt, dass einerseits das virtuelle zweite Pixel 61 mit der vorgegebenen relativen Pixelgröße bei der Interpolation vollständig innerhalb der Nachbarschaftsumgebung bzw. innerhalb des lokalen Filters gelegen ist, und dass andererseits kein zu großer Rechenaufwand durch eine zu große Wahl der Nachbarschaftsumgebung entsteht. Weiterhin wird vorgeschlagen, die Breite und Höhe der Umgebung jeweils gleich groß zu wählen, so dass nachteilige Anisotropie-Effekte vermieden werden. Schließlich wird vorgeschlagen, die Umgebung um das Zentralquadrat 65 herum symmetrisch zu wählen. Diese Symmetrie vereinfacht die Berechnung, vermeidet unnötigen Rechenaufwand und trägt wiederum zur Vermeidung nachteiliger Anisotropie-Effekte bei. Für Werte der relativen Pixelgröße von w kleiner oder gleich 2 x 2 wird vorgeschlagen, die Größe der Nachbarschaftsumgebung zum Erzielen der vorgenannten Vorteile wie in Fig. 5 gezeigt zu 4 x 4 zu wählen. Für größere Werte der relativen Pixelgröße wird eine geeignete größere, quadratische Umgebung mit einer geraden Anzahl an ersten Pixeln pro Seitenlänge vorgeschlagen, beispielsweise 6x6, 8x8, 10 x 10 usw.

Wie vorstehend beschrieben, wird gemäß der Erfindung vorgeschlagen, dass für zwei oder mehr virtuelle zweite Pixel gleicher Größe an unterschiedlichen Zwischenpositionen zwischen den ersten Pixeln die Bestimmung des jeweiligen Helligkeitswertes eine Interpolation der Pixel einer mehrere der ersten Pixel umfassenden Nachbarschaftsumgebung der jeweiligen Zwischenposition mittels eines zugehörigen lokalen Filters umfasst, wobei jeder der lokalen Filter eine Mehrzahl von Filterkoeffizienten umfasst, wobei für zumindest einen der lokalen Filter mehr als einer der Filterkoeffizienten ungleich Null ist, und wobei die Summe der Quadrate der Filterkoeffizienten für jeden der lokalen Filter gleich einem konstanten Wert ist, der gemäß einer ersten Bedingung für alle lokalen Filter gleich ist. Zudem erfüllen die lokalen Filter vorzugsweise noch ein oder mehrere einer zweiten Bedingung, einer dritten Bedingung und einer vierten Bedingung, wie ebenfalls vorstehend beschrieben.

Wie die Filterkoeffizienten der lokalen Filter so festgelegt werden können, dass sie die beschriebene(n) Bedingung(en) erfüllen, wird im Folgenden in größerem Detail beschrieben:
Für eine vorgegebene Filtergröße wird eine Interpolationsfunktion gewählt. Diese Funktion liefert für jede Zwischenposition x oder y (ein-dimensional) bzw. x und y (zwei-dimensional) eines virtuellen zweiten Pixels die jeweils zugehörigen Filterkoeffizientenwerte. Aus Gründen der Vereinfachung wird nachfolgend die Zwischenposition nur als x bezeichnet, wobei x im Falle einer zwei-dimensionalen Interpolation als Vektor aufgefasst werden kann. Werden die Filterkoeffizientenwerte nur für eine endlich große Anzahl von Zwischenpositionen x benötigt, so können diese auch in einer Tabelle bereitgestellt werden.

Die benötigten Filterkoeffizienten der lokalen Filter für die Interpolation können mit Hilfe einer Synthesefunktion ermittelt werden, z.B., indem die Synthesefunktion geeignet abgetastet wird. Diese Abtastung erfolgt zweckmäßigerweise äquidistant mit Abständen von 1 bezogen auf die Größe der ersten Pixel und zwar so, dass der Mittel- oder Nullpunkt der Synthesefunktion jeweils auf den Wert x verschoben wird. Dies wird in den folgenden Ausführungen dadurch symbolisiert, dass die Synthesefunktion in Abhängigkeit von einem Parameter xf beschrieben wird, wobei sich die Werte xf, an denen die Synthesefunktion für eine bestimmte Zwischenposition x abgetastet wird, zu -x + n ergeben, wobei n alle negativen oder positiven ganzzahligen Werte inklusive der Null annimmt für die der Wert -x + n im Wertebereich der Synthesefunktion liegt. Grundsätzlich ist es immer möglich, aus einem beliebigen Filter mit Filterkoeffizienten eine mindestens punktweise definierte Synthesefunktion zu formulieren.

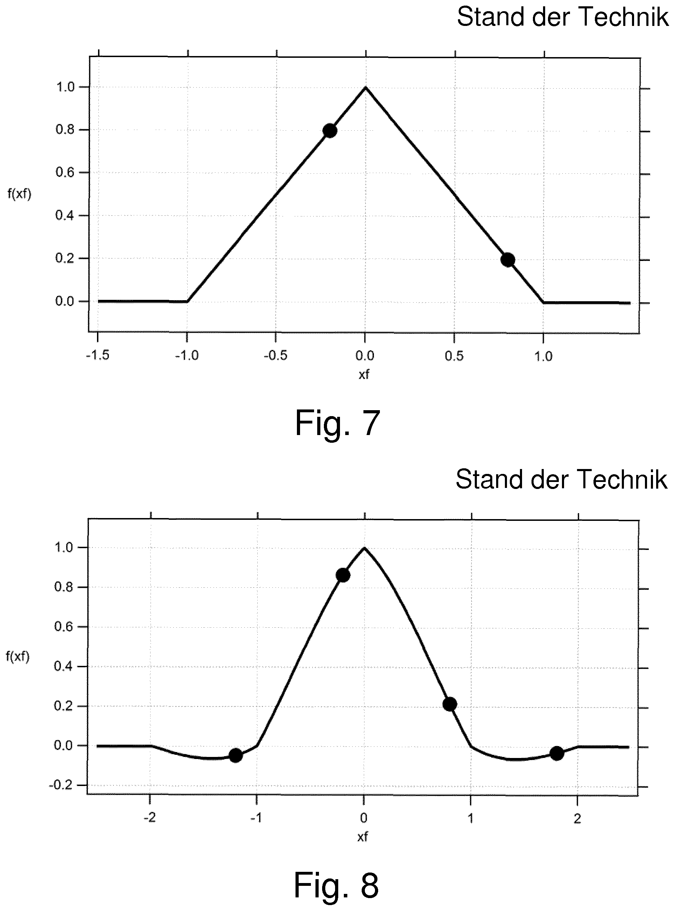

Fig. 7 zeigt schematisch und exemplarisch eine Synthesefunktion für eine lineare Interpolation. Die Filterkoeffizienten für die Zwischenposition $x = 0{,}2$ werden hier an den Positionen $xf = -0{,}2$ (gleich $-x + 0$) und $xf = 0{,}8$ (gleich $-x + 1$) abgetastet. Wird ein lokaler Filter gemäß dieser Synthesefunktion in zwei orthogonalen Richtungen angewandt, erhält man eine bilineare Interpolation.

Eine alternative Synthesefunktion für eine kubische Interpolation ist schematisch und exemplarisch in Fig. 8 gezeigt. Die Filterkoeffizienten für die Zwischenposition $x = 0{,}2$ werden hier an den Positionen $xf = -1{,}2$ (gleich $-x + (-1)$), $xf = -0{,}2$ (gleich $-x + 0$), $xf = 0{,}8$ (gleich $-x + 1$) und $xf = 1{,}8$ (gleich $-x + 2$) abgetastet. Wird ein lokaler Filter gemäß dieser Synthesefunktion in zwei orthogonalen Richtungen angewandt, erhält man eine bikubische Interpolation.

Die Synthesefunktion für eine lineare Interpolation gemäß Fig. 7 und die Synthesefunktion für eine kubische Interpolation gemäß Fig. 8 sind aus dem Stand der Technik bekannt. Sie können als Ausgangspunkt genommen werden, um auf ihrer Basis mittels der nachstehend beschriebenen Korrekturen Synthesefunktionen für eine erfindungsgemäße Interpolation zu erzeugen.

Es ist allgemein vorteilhaft, wenn die Synthesefunktion stetig ist, weil dadurch störende Helligkeitssprünge vermieden werden. Beispielsweise kann die Interpolationsfunktion linear, stückweise linear, quadratisch oder kubisch sein. Im zwei-dimensionalen Fall kann sie z.B. der bekannten bilinearen, bikubischen oder Spline-Interpolation genügen.

Weiter ist es vorteilhaft, wenn die Synthesefunktion am Rand ihres Wertebereiches, der sich aus der vorgegebenen Filtergröße ergibt und beispielsweise in Fig. 7 von $-1{,}0$ bis $1{,}0$ bzw. in Fig. 8 von $-2{,}0$ bis $2{,}0$ reicht, stetig den Wert Null annimmt. Dadurch werden insbesondere Helligkeitssprünge beim Verschieben der Nachbarschaftsumgebung verhindert.

Es ist ferner vorteilhaft, wenn darüber hinaus auch die erste Ableitung der Synthesefunktion nach der Position $xf$ am Rand ihres Wertebereiches den Wert Null annimmt. Dadurch werden unnatürlich wirkende Helligkeitsverläufe mit darin enthaltenen "Knicken" der Helligkeitsverteilung vermieden. Solche Helligkeitsverläufe sind beispielsweise nach Anwendung der bekannten bilinearen Interpolation sichtbar.

Es ist außerdem vorteilhaft, wenn die Synthesefunktion so ausgestaltet ist, dass für alle erforderlichen Zwischenpositionen $x$ die Summe der aus der Synthesefunktion erhaltenen zugehörigen Filterkoeffizienten gleich ist und beispielsweise in dem Fall, dass die relative Pixelgröße $w$ gleich $1 \times 1$ und der Gain $g$ gleich 1 sind, den Wert 1 annimmt. Dadurch wird die dritte Bedingung erfüllt.

Sollte andererseits eine Synthesefunktion gewählt worden sein, die die dritte Bedingung zunächst nicht erfüllt, so kann die Erfüllung der dritten Bedingung durch eine Normierung erreicht werden. Ein Beispiel für eine Funktion, die die dritte Bedingung nicht erfüllt, ist eine Gaußsche Glockenkurve. Dazu werden für jede Zwischenposition $x$ die zugehörigen Filterkoeffizienten jeweils durch die zuvor ermittelte Summe der Filterkoeffizienten geteilt. Diese Normierung kann alternativ auch auf der Synthesefunktion selbst vorgenommen werden. Da die Normierung punktweise durchgeführt wird, kann sich hierdurch die Kurvenform der Synthesefunktion ändern.

Es kann auch eine Synthesefunktion gewählt werden, die die vierte Bedingung erfüllt. Dies ist beispielsweise der Fall, wenn eine geeignete lineare bzw. bilineare oder eine geeignete kubische bzw. bikubische Interpolation gewählt wird.

Sollte eine Synthesefunktion gewählt worden sein, die die vierte Bedingung nicht erfüllt, so kann eine Korrektur vorgenommen werden. Diese Korrektur kann dadurch geschehen, dass die Synthesefunktion oder die Filterkoeffizienten mit Korrekturwerten addiert oder multipliziert werden. Dabei kann die Korrektur so vorgenommen werden, dass die dritte Bedingung, wenn sie zuvor erfüllt war, weiterhin erfüllt bleibt.

Eine entsprechende zweite Funktion zur additiven Korrektur der vierten Bedingung (zweite Korrekturfunktion) kann die Eigenschaft aufweisen, sich gegenüber der dritten Bedingung neutral zu verhalten. Dann können beliebige Vielfache der zweiten Korrekturfunktion zu der Synthesefunktion oder zu den Filterkoeffizienten addiert werden, ohne dass die dritte Bedingung dadurch verletzt würde. Diese Neutralität wird dadurch erzielt, dass für jede Zwischenposition $x$ die Summe der Werte der zweiten Korrekturfunktion, die den jeweiligen Filterkoeffizientenwerten für die Zwischenposition $x$ zugeordnet sind, Null ergibt. Dies ist genau dann der Fall, wenn die Summe der Werte der zweiten Korrekturfunktion bei äquidistanter Abtastung in Abständen von jeweils 1, unabhängig von der Zwischenposition $x$, gleich Null wird.

Weiterhin ist es zweckmäßig zu fordern, dass die zweite Korrekturfunktion für alle Zwischenpositionen $x$ die Eigenschaft aufweist, bei Addition zu der Synthesefunktion eine Veränderung des Schwerpunktes bewirken zu können. Dies leistet die zweite Korrekturfunktion genau dann, wenn das Drehmoment der Abtastwerte (bei äquidistanter Abtastung in Abständen von jeweils 1) jeweils ungleich Null ist.

Um diesen Sachverhalt zu veranschaulichen, wird in Analogie zur klassischen Mechanik der Begriff des Drehmomentes eines lokalen Filters als Summe der Produkte der Filterkoeffizienten mit ihren jeweiligen Positionen in der Synthesefunktion definiert. Damit wird die zuletzt genannte Forderung zu dem Satz, dass der Drehmoment der zweiten Korrekturfunktion für alle Zwischenpositionen $x$ ungleich Null ist.

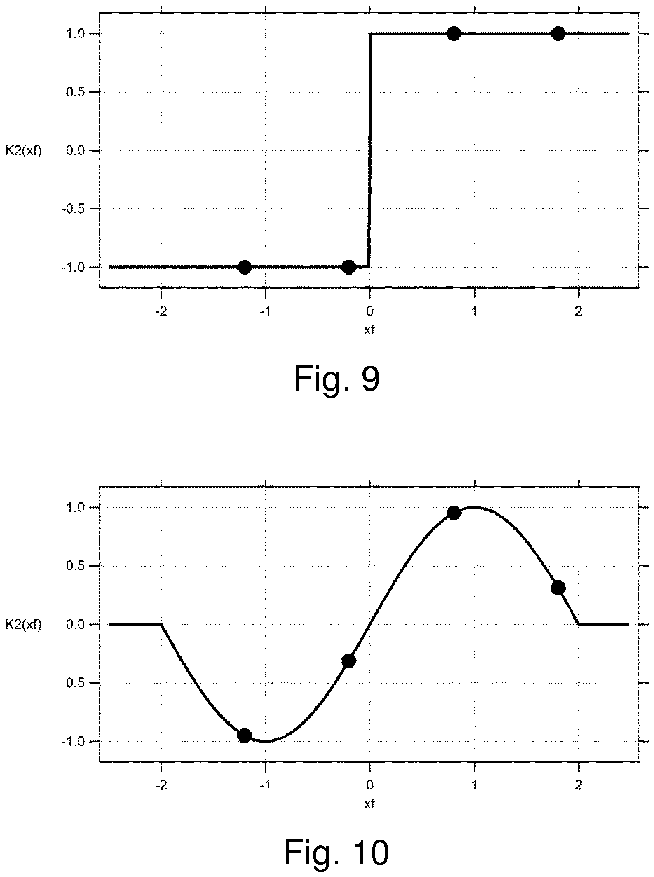

Fig. 9 bis 11 zeigen schematisch und exemplarisch Funktionen als zweite Funktion für eine Korrektur der Position des Schwerpunktes.

Als erstes Beispiel für eine zweite Korrekturfunktion K2(xf) ist in Fig. 9 die Vorzeichenfunktion K2(xf) = sgn(xf) gezeigt, die für Positionen xf < 0 den Wert -1 annimmt und für Positionen xf > 0 den Wert 1. Diese Funktion erfüllt die vorstehend beschriebenen Voraussetzungen für die zweite Korrekturfunktion; sie hat jedoch den Nachteil, dass ihre räumliche Ausdehnung nicht begrenzt ist und dies somit auch für die räumliche Ausdehnung der von ihr gegebenenfalls verursachten Artefakte gilt.

Als zweites Beispiel für eine zweite Korrekturfunktion K2(xf) sei eine mit einer Rechteckfunktion gefensterte Sinuswelle genannt, also eine einzelne Sinuswelle der Form $K2(xf) = \sin(\omega \ast xf) \ast \Theta(\pi/\omega - |xf|)$. Dabei ist $\Theta(xf)$ die Einheitssprungfunktion, die in der Literatur auch als Heavyside-Funktion bezeichnet wird. Durch die Fensterung nimmt K2(xf) in diesem Fall links von ihrer negativen Halbwelle und rechts von ihrer positiven Halbwelle jeweils den Wert Null an. Eine solche Funktion ist in Fig. 10 für $\omega = \pi/2$ gezeigt. Für die Bereiche mit xf < -2 und xf > 2 nimmt die Funktion jeweils den Wert Null an. Gegenüber den zuvor genannten Funktionen hat diese Funktion den Vorteil, dass sie am Rand ihres Wirkungsbereiches stetig Null wird und somit die räumliche Ausdehnung der von ihr gegebenenfalls verursachten Artefakte begrenzt ist.

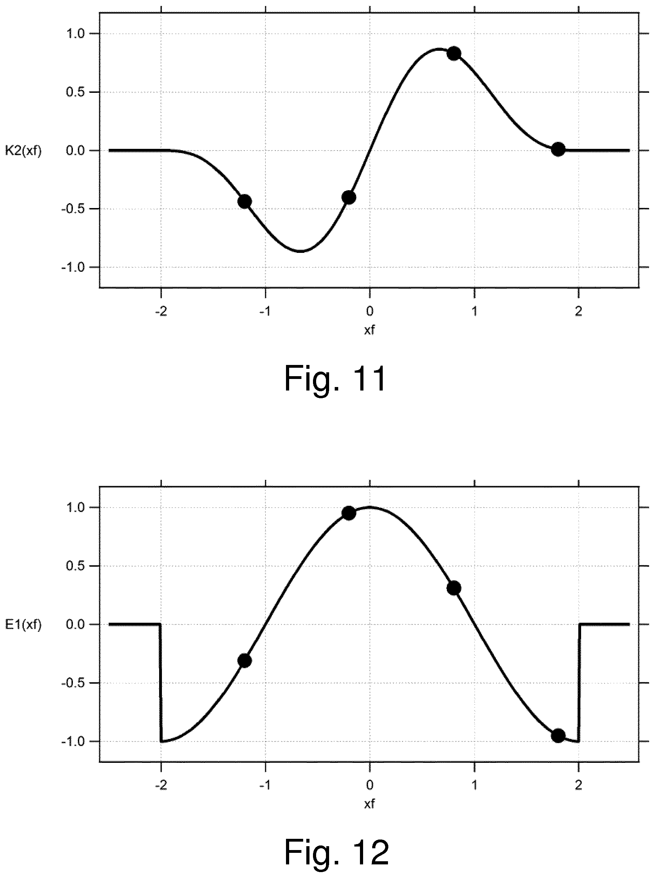

Als drittes Beispiel für eine geeignete Korrekturfunktion K2(xf) sei eine Funktion genannt, die stetig differenzierbar am Rand ihres Wirkungsbereiches Null wird. Eine solche Funktion ist die Funktion $K2(xf) = (2/3 \ast \sin(\omega \ast xf) + 1/3 \ast \sin(2\omega \ast xf)) \ast \Theta(\pi/\omega - |xf|)$, die schematisch und exemplarisch in Fig. 11 gezeigt ist. Für die Bereiche mit xf < -2 und xf > 2 nimmt auch diese Funktion jeweils den Wert Null an. Gegenüber den zuvor genannten Funktionen hat diese Funktion den Vorteil, dass sie am Rand ihres Wirkungsbereiches stetig differenzierbar Null wird und somit die räumliche Ausdehnung der von ihr gegebenenfalls verursachten Artefakte begrenzt ist und sichtbare "Knicke" der Helligkeitsverteilung vermieden werden.

Eine Korrektur der Position des Schwerpunktes mit einer zweiten Korrekturfunktion kann dadurch erfolgen, dass für jede Zwischenposition x das Drehmoment der Synthesefunktion als ein Wert u(xf) und das Drehmoment der zweiten Korrekturfunktion als ein Wert v(xf) bestimmt wird, und dass aus diesen Werten ein positionsabhängiger Mischfaktor MF(xf) = -u(xf) / v(xf) bestimmt wird. Wird nun für jede Zwischenposition x das MF(xf)-fache der zweiten Korrekturfunktion zu der Synthesefunktion addiert, so erhält man als Ergebnis eine für alle Zwischenpositionen x drehmomentfreie und somit schwerpunktsneutrale Funktion F2(xf).

Die zweite Bedingung kann durch Addition eines Vielfachen einer dritten Korrekturfunktion K3(xf) erreicht werden. Dazu wird zweckmäßigerweise eine Funktion verwendet, die bezüglich der dritten und vierten Bedingung neutral ist. Denn dadurch bleibt auch bei Addition eines Vielfachen der dritten Korrekturfunktion K3(xf) die Erfüllung der dritten und vierten Bedingung erhalten.

Dazu wird vorgeschlagen, zunächst eine symmetrische Korrekturfunktion E1(xf) zu wählen, die neutral bezüglich der dritten Bedingung ist, d.h., die die Eigenschaft aufweist, dass für alle Zwischenpositionen x die Summe der zugehörigen Filterkoeffizienten jeweils Null wird.

Diese Eigenschaft findet man oft bei periodischen Funktionen mit geeigneter Kreisfrequenz $\omega$. Es wird daher vorgeschlagen, als E1(xf) eine Cosinusfunktion der Form $E1(xf) = \cos(\omega \ast xf)$ zu verwenden. Um ihre Wirkung und damit auch gegebenenfalls von ihr verursachte Artefakte auf einen definierten Ortsbereich zu begrenzen, wird zudem vorgeschlagen, eine Fensterung vorzunehmen, beispielsweise in der Form $E1(xf) = \cos(\omega \ast xf) \ast \Theta(3/2 \ast \pi/\omega - |xf|)$. Diese Funktion ist in Fig. 12 schematisch und exemplarisch für $\omega = \pi/2$ gezeigt.

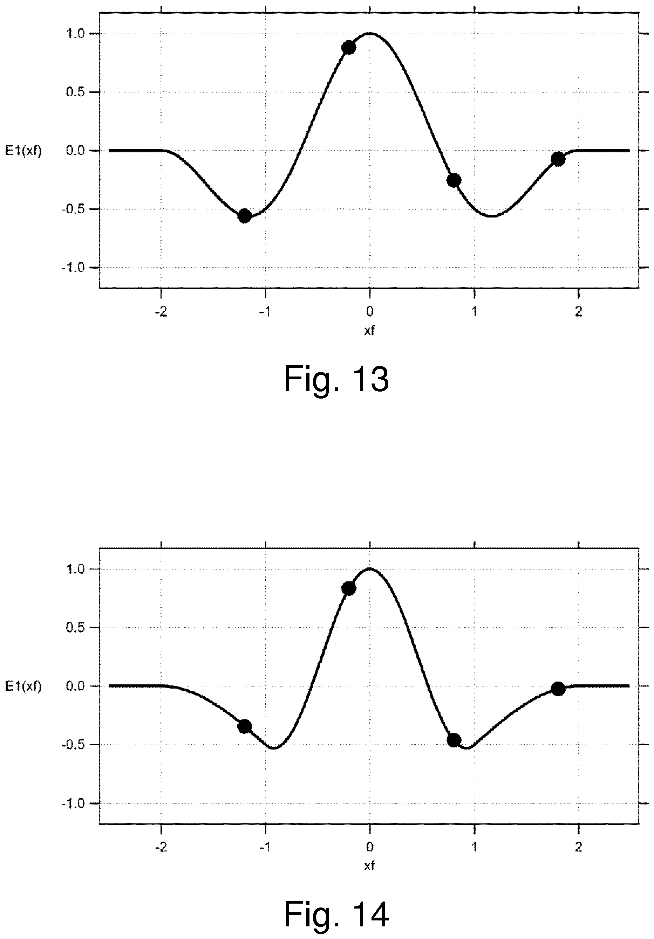

Ein weiteres Beispiel bildet die Funktion $E1(xf) = (1/2 \ast \cos(\omega \ast xf) + 1/2 \ast \cos(2\omega \ast xf)) \ast \Theta(\pi/\omega - |xf|)$ mit $\omega = \pi$. Diese Funktion ist schematisch und exemplarisch in Fig. 13 gezeigt und in ihrer Form dem Ricker-Wavelet nachempfunden, das in der Literatur auch als Mexikanerhutfunktion bezeichnet wird und das oft als Schärfungsfilter für Bilder eingesetzt wird. Im Gegensatz zum Ricker-Wavelet besitzt die hier vorgeschlagene Funktion den Vorteil, dass sie für alle Zwischenpositionen x gegenüber der dritten Bedingung neutral ist, d.h., dass die Summe der zugehörigen Filterkoeffizienten jeweils gleich Null ist. Gegenüber der in Fig. 12 gezeigten Funktion besitzt sie die beiden Vorteile, dass sie am Fensterrand stetig und stetig differenzierbar ist.

Ein drittes Beispiel ist die Funktion $E1(xf) = 2 \ast \cos^2(\omega \ast xf) \ast \Theta(1/2 \ast \pi/\omega - |xf|) - \cos^2(\omega \ast xf/2) \ast \Theta(\pi/\omega - |xf|)$ mit $\omega = \pi/2$, die schematisch und exemplarisch in Fig. 14 gezeigt ist. Auch diese Funktion ist in ihrer Form dem Ricker-Wavelet nachempfunden. Im Vergleich mit der in Fig. 13 dargestellten Funktion zeigt sich aber ein etwas abweichendes Frequenzverhalten.

Die vorgeschlagenen Korrekturfunktionen E1(xf) erfüllen jedoch noch nicht die vierte Bedingung. Daher wird vorgeschlagen, eine geeignetes Vielfaches einer zweiten Korrekturfunktion auf die vorstehend beschriebene Weise auch auf die Funktion E1(xf) zu addieren, wodurch eine symmetrische Korrekturfunktion E2(xf) erhalten wird, die drehmomentfrei und somit schwerpunktsneutral ist. Dies kann dadurch erfolgen, dass für jede Zwischenposition x das Drehmoment der Korrekturfunktion E1(xf) als ein Wert u2(xf) und das Drehmoment der zweiten Korrekturfunktion K1(xf) als ein Wert v2(xf) bestimmt wird, und dass aus diesen Werten ein positionsabhängiger Mischfaktor MF2(xf) = -u2(xf) / v2(xf) bestimmt wird. Wird nun für jede Zwischenposition x das MF2(xf)-fache der zweiten Korrekturfunktion K1(xf) zu der Korrekturfunktion E1(xf) addiert, so erhält man als Ergebnis eine für alle Zwischenpositionen x drehmomentfreie und somit schwerpunktsneutrale, symmetrische Korrekturfunktion E2(xf).

Schließlich kann die zweite Bedingung dadurch erfüllt werden, dass ein - gegebenenfalls positionsabhängiges - Vielfaches der drehmomentfreien und helligkeitsneutralen, symmetrischen Korrekturfunktion E2(xf) zu der drehmomentfreien Synthesefunktion F2(xf) addiert wird. Da die zweite Bedingung einen Spezialfall der ersten Bedingung darstellt, bei dem der konstante Wert dem Quadrat der Rauschverstärkung R entspricht, ist es dadurch möglich, eine Synthesefunktion F3(xf) zu erhalten, die alle vier Bedingungen erfüllt.

Dabei ist es zweckmäßig, den Mischfaktor M(x) so zu wählen, dass die als F3(xf) = F2(xf) + M(xf) * E2(xf) erhaltene Synthesefunktion auch die zweite Bedingung für alle Zwischenpositionen x erfüllt. Da die zweite Bedingung lautet, dass für jeden der lokalen Filter die Summe der Quadrate der Filterkoeffizienten dem Quadrat der Rauschverstärkung R entspricht, lässt sich M(xf) für jede Zwischenposition x jeweils als Lösung einer quadratischen Gleichung der Form $a * M(xf)^2 + b * M(xf) + c = 0$ bestimmen. Diese wird durch Auflösen der Berechnungsgleichung von F3(xf) erhalten. Hierzu wird für jede Zwischenposition x ein Wert a als Summe der Quadrate der Filterkoeffizienten von E2(xf) bestimmt, ein Wert b als das Zweifache der Summe der Produkte der jeweiligen Filterkoeffizienten von F2(xf) mit E2(xf) und ein Wert c als Summe der Quadrate der Filterkoeffizienten von F2(xf) minus R. Dann erhält man M(xf) als eine Lösung der quadratischen Gleichung mittels der Lösungsformel $M(xf) = (-b + sqrt(b^2 - 4*a*c))/(2*a)$. Hierbei bezeichnet sqrt die Wurzelfunktion.

Die theoretisch mögliche zweite Lösung der quadratischen Gleichung $M2(xf) = (-b - sqrt(b^2 - 4*a*c))/(2*a)$ führt zu einer Vorzeichenumkehr der Korrekturfunktion E2(xf), womit diese nicht mehr die typische Form eines Schärfungsfilters aufweist und somit zu deutlichen Bildfehlern führt. Daher wird die zweite Lösung der quadratischen Gleichung nicht weiter verwendet.

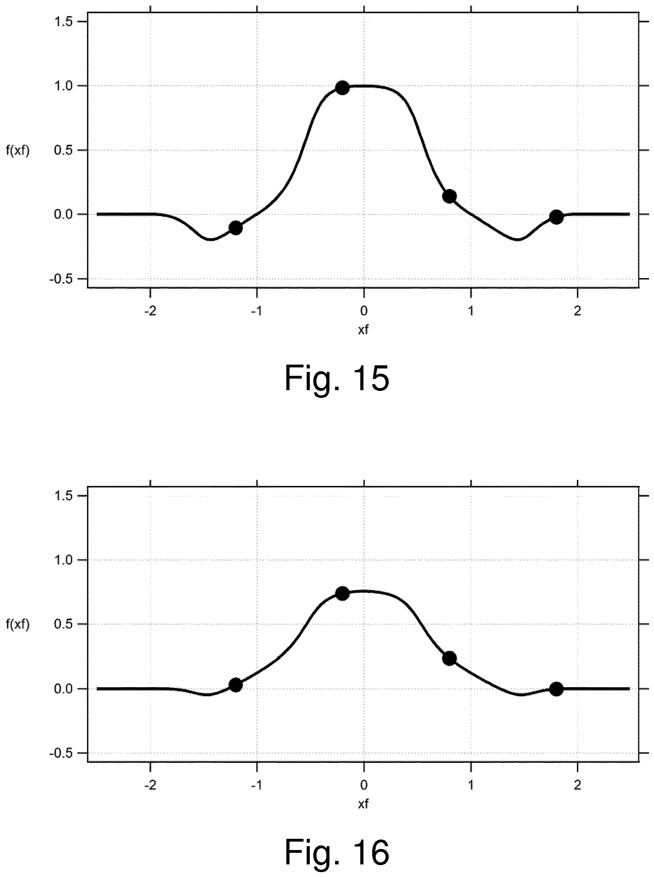

Fig. 15 zeigt schematisch und exemplarisch eine Synthesefunktion, die für eine relative Pixelgröße von w gleich 1 x 1 alle vier Bedingungen erfüllt. Sie wurde folgendermaßen berechnet: Zunächst wurde eine Synthesefunktion für eine kubische bzw. bikubische Interpolation für einen Gain von g gleich 1 gewählt. Da diese Synthesefunktion bereits die dritte und vierte Bedingung erfüllt, wurde diesbezüglich keine Korrektur vorgenommen. Als Korrekturfunktion für E1(xf) wurde eine Funktion gemäß Fig. 13 gewählt. Zu dieser wurde eine Schwerpunktskorrektur addiert, welche aus der Funktion K2(xf) gemäß Fig. 11 mal einem Mischfaktor MF2(xf) = -u2(xf) / v2(xf) besteht. u2(xf) ist dabei das Drehmoment der Filterkoeffizienten der Funktion E1(xf) und v2(xf) das Drehmoment der Filterkoeffizienten der Funktion K2(xf). Dadurch wurde die Funktion E2(xf) erhalten. Schließlich wurde die relative Pixelgröße w gleich 1 x 1 und entsprechend die Rauschverstärkung R gleich 1 gewählt und der Mischfaktor M(xf) für alle Zwischenpositionen x mit der oben genannten Lösungsformel für die quadratische Gleichung ermittelt, wodurch die Synthesefunktion F3(xf) = F1(xf) + M(xf) * E2(xf) erhalten wurde.

Aus dieser Synthesefunktion können für jede Zwischenposition x die zugehörigen Filterkoeffizienten des entsprechenden lokalen Filters abgelesen werden. Mit Hilfe dieser Filterkoeffizienten kann dann eine Interpolation so vorgenommen werden, dass die Übertragung des Rauschens nicht nur räumlich homogen erfolgt, sondern der Verstärkungswert für die Übertragung des Rauschens auch der gewünschten Fläche der Ausgangspixel (zweite Pixel) entspricht.

Eine alternative Synthesefunktion, die für eine relative Pixelgröße von w gleich 5/3 x 5/3 alle vier Bedingungen erfüllt, ist schematisch und exemplarisch in Fig. 16 gezeigt. Sie wurde aus den gleichen Funktionen errechnet, wie in dem vorstehend beschriebenen Beispiel. Lediglich die relative Pixelgröße w der Ausgangspixel wurde auf 5/3 x 5/3 geändert, d.h., die Fläche der virtuellen zweiten Pixel wurde jeweils um einen Faktor w gleich 2,78 im Vergleich zu der Fläche eines jeweiligen ersten Pixels vergrößert. Mit Hilfe der aus dieser Synthesefunktion erhaltenen Filterkoeffizienten kann ein Bild somit so gefiltert werden, dass die relative Pixelgröße 5/3 x 5/3 beträgt und somit eine Vergrößerung der Pixel sowohl in der Breite als auch in der Höhe stattfindet. Auch in diesem Fall erfolgt die Übertragung des Rauschens räumlich homogen, wobei der Verstärkungswert für die Übertragung des Rauschens wiederum der gewünschten Größe der Ausgangspixel (virtuelle zweite Pixel) entspricht.

Eine weitere alternative Synthesefunktion, die für eine relative Pixelgröße von w gleich 2/3 x 2/3 alle vier Bedingungen erfüllt, ist schematisch und exemplarisch in Fig. 17 gezeigt. Sie wurde aus den gleichen Funktionen errechnet, wie in den beiden vorstehend beschriebenen Beispielen. Die relative Pixelgröße w der Ausgangspixel wurde diesmal auf 2/3 x 2/3 geändert, d.h., die Fläche der virtuellen zweiten Pixel wurde jeweils um einen Faktor w gleich 2,25 im Vergleich zu der Fläche eines jeweiligen ersten Pixels verkleinert. Mit Hilfe der aus dieser Synthesefunktion erhaltenen Filterkoeffizienten kann ein Bild somit so gefiltert werden, dass die relative Pixelgröße 2/3 x 2/3 beträgt und somit eine Verkleinerung der Pixel sowohl in der Breite als auch in der Höhe stattfindet. Auch in diesem Fall erfolgt die Übertragung des Rauschens räumlich homogen, wobei der Verstärkungswert für die Übertragung des Rauschens wiederum der gewünschten Fläche der Ausgangspixel (virtuelle zweite Pixel) entspricht.

Um die Wirkung des erfindungsgemäßen Filters zu demonstrieren, wurde ein Experiment durchgeführt. Dazu wurde auf die im EMVA-Standard 1288 angegebene Weise eine erste Serie von Rohbildern mit einer handelsüblichen Industriekamera mit einem CCD-Bildsensor mit einer ersten Pixelgröße aufgenommen. Dieser verfügt für die verwendete grüne Wellenlänge des Lichts über eine Quanteneffizienz QE von 53,6%.

Aus dieser ersten Bilderserie mit einer ersten Auflösung wurde für verschiedene gewünschte Größen der virtuellen zweiten Pixel jeweils eine zweite Bildserie mit einer entsprechenden zweiten Auflösung einerseits mittels bikubischer Interpolation und andererseits unter Anwendung der erfindungsgemäßen Interpolation errechnet. Dabei entspricht das Verhältnis der zweiten Auflösung zur ersten Auflösung in x- und in y-Richtung jeweils dem Kehrwert des Verhältnisses der Größe der virtuellen zweiten Pixel zu der Größe der ersten Pixel. Die resultierenden zweiten Bilderserien wurden jeweils auf die im EMVA-Standard 1288 angegebene Weise unter Annahme der zweiten Pixelgröße ausgewertet.

Fig. 18 zeigt schematisch und exemplarisch die dabei für die kubische Interpolation erhaltenen Quanteneffizienzwerte QE in Prozent aufgetragen über der relativen Pixelgröße w. Dabei zeigt sich für die relative Pixelgröße 1 x 1, die mit der Größe der ersten Pixel identisch ist, ein korrekter Quanteneffizienzwert 100 und für die relative Pixelgröße 2 x 2, die einem ganzzahligen Vielfachen der Größe der ersten Pixel entspricht, ebenfalls ein korrekter Quanteneffizienzwert 101.

Für alle Werte der relativen Pixelgröße w, die keinem ganzzahligen Vielfachen der Größe der ersten Pixel entsprechen, zeigen sich Quanteneffizienzwerte, die deutlich oberhalb von 80% liegen. Diese Werte sind fehlerhaft. Sie entsprechen nicht der Quanteneffizienz der digitalen Kamera, denn diese sollte als material- und designabhängige physikalische Eigenschaft des Sensors auch bei einer Änderung der Pixelgröße konstant bleiben. Die ermittelten QE-Werte unterstreichen, dass die bikubische Interpolation auf eine Weise, die der in Fig. 4 gezeigten ähnelt, eine unerwünschte Vergrößerung der Pixelfläche vornimmt.

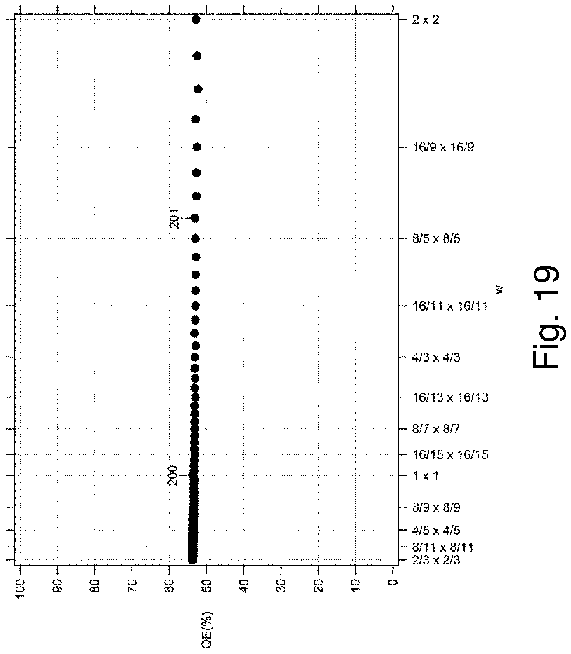

Fig. 19 zeigt schematisch und exemplarisch die QE-Werte für die erfindungsgemäße Interpolation. Nicht nur der für die ursprüngliche Auflösung erhaltene Quanteneffizienzwert 200, sondern auch alle anderen Quanteneffizienzwerte 201 entsprechen weitgehend dem korrekten Wert. Das zeigt, dass die erfindungsgemäße Interpolation die Änderung der Pixelgröße korrekt durchführt und dass wichtige physikalische Eigenschaften der Pixel dabei korrekt erhalten werden.

Vorstehend wurde erläutert, wie lokale Filter für zwei oder mehr virtuelle zweite Pixel (Ausgangspixel) gleicher Größe an unterschiedlichen Zwischenpositionen zwischen den ersten Pixeln (Eingangspixeln) so festgelegt werden können, dass mit ihrer Hilfe die Bilddaten des Bildsensors so interpoliert werden können, dass dabei ein möglichst korrektes physikalisches Verhalten für eine gewünschte Fläche der virtuellen zweiten Pixel erzielt wird.

Die beispielhaft genannten lokalen Filter sind aufgrund der einfacheren Verständlichkeit im Wesentlichen ein-dimensional beschrieben. Natürlich kann die entsprechende Lehre ebenso auf zwei-dimensionale Filter angewandt werden. Alternativ kann eine zwei-, drei- oder eine noch höher-dimensionale Wirkung erzielt werden, indem mehrere ein-dimensionale Filterungsvorgänge in beliebiger Reihenfolge hintereinander ausgeführt werden, z.B., zuerst in x-Richtung, dann in y-Richtung, usw.

Als konkretes Beispiel für einen lokalen Filter, der alle vier Bedingungen erfüllt, sei der Fall angenommen, dass die Auflösung der Bilddaten eines Bildsensors in horizontaler und in vertikaler Richtung jeweils um den Faktor 5/6 reduziert werden soll. Damit steigt die Größe der virtuellen zweiten Pixel gegenüber der Größe der ersten Pixel in beiden Richtungen jeweils um den Faktor 6/5 gleich 1,2 an, d.h., die relative Pixelgröße w entspricht jeweils 1,2 und insgesamt 1,2 x 1,2 gleich 1,44 (also $(6/5)^2$). In jeder Richtung können die Zwischenpositionen dann an den folgenden Positionen zwischen den ersten Pixeln gewählt werden: 2; 3,2; 4,4; 5,6; 6,8; 8; 9,2; 10,4; 11,6; 12,8; 14; usw. In diesem Beispiel startet die Folge der Zwischenpositionen nicht mit Null sondern mit 2, damit für jedes virtuelle Pixel eine ausreichend große Nachbarschaftsumgebung zur Bestimmung des jeweiligen Helligkeitswertes zur Verfügung steht.

Damit ergeben sich im Ein-dimensionalen die folgenden fünf Zwischenpositionen:
(0,0) (0,2) (0,4) (0,6) (0,8)

Für diese fünf Zwischenpositionen können für einen ein-dimensionalen Filter mit einer Größe gleich 4 die Filterkoeffizienten für einen vorgegebenen Gain g gleich 1 - relativ zum Gain der ersten Pixel - wie folgt gewählt werden:

| | | | | |
|---|---|---|---|---|
| **(0,0):** | | | | |
| | 0,0 | 0,0446582 | 0,910684 | 0,0446582 |
| **(0,2):** | | | | |
| | -0,0146189 | 0,174828 | 0,8942 | -0,0544097 |
| **(0,4):** | | | | |
| | -0,0857036 | 0,435544 | 0,786022 | -0,135863 |
| **(0,6):** | | | | |
| | -0,135863 | 0,786022 | 0,435544 | -0,0857035 |
| **(0,8):** | | | | |
| | -0,0544097 | 0,8942 | 0,174828 | -0,0146189 |

Die Filterkoeffizienten erfüllen für jeden der lokalen Filter die Eigenschaft, dass ihre Summe gleich dem vorgegebenen Gain g, d.h., gleich 1, ist (dritte Bedingung), dass ihr Schwerpunkt der zugehörigen Zwischenposition entspricht (vierte Bedingung), und dass die Summe ihrer Quadrate gleich einem konstanten Wert ist (erste Bedingung), der hier 0,833333 gleich 5/6 ist. Dieser Wert entspricht auch dem Quadrat der Rauschverstärkung R, die dem Produkt des vorgegebenen Gains g der virtuellen zweiten Pixel relativ zum Gain der ersten Pixel (hier also 1) und dem Kehrwert der Wurzel der vorgegebenen relativen Pixelgröße w (hier also dem Kehrwert der Wurzel aus 6/5, d.h., der Größenänderung der virtuellen zweiten Pixel relativ zu den ersten Pixeln in die jeweilige Richtung) entspricht. Wird der eindimensionale Filter in horizontaler und in vertikaler Richtung angewendet, so ergibt sich die gewünschte Auflösungsreduktion um den Faktor 5/6 in beide Richtungen.

In der zwei-dimensionalen Betrachtung lauten die $5^2$ = 25 zwei-dimensionalen Zwischenpositionen entsprechend:

| | | | | |
|---|---|---|---|---|
| (0,0\|0,0) | (0,0\|0,2) | (0,0\|0,4) | (0,0\|0,6) | (0,0\|0,8) |
| (0,2\|0,0) | (0,2\|0,2) | (0,2\|0,4) | (0,2\|0,6) | (0,2\|0,8) |
| (0,4\|0,0) | (0,4\|0,2) | (0,4\|0,4) | (0,4\|0,6) | (0,4\|0,8) |
| (0,6\|0,0) | (0,6\|0,2) | (0,6\|0,4) | (0,6\|0,6) | (0,6\|0,8) |
| (0,8\|0,0) | (0,8\|0,2) | (0,8\|0,4) | (0,8\|0,6) | (0,8\|0,8) |

Für diese 25 Zwischenpositionen lassen sich entsprechend zwei-dimensionale Filter mit jeweils $4^2$ = 16 Koeffizienten berechnen. Im Folgenden sind beispielhaft die Filterkeffizienten für die Zwischenpositionen (0,0\|0,0), (0,4\|0,4) und (0,8\|0,8) angegeben:

**(0,0\|0,0):**

| | | | |
|---|---|---|---|
| 0,0 | 0,0 | 0,0 | 0,0 |
| 0,0 | 0,0019944 | 0,04067 | 0,0019944 |
| 0,0 | 0,04067 | 0,82934 | 0,04067 |
| 0,0 | 0,0019944 | 0,04067 | 0,0019944 |

**(0,4\|0,4):**

| | | | |
|---|---|---|---|
| 0,0073451 | -0,037328 | -0,067365 | 0,011644 |
| -0,037328 | 0,1897 | 0,34235 | -0,059174 |
| -0,067365 | 0,34235 | 0,61783 | -0,10679 |
| 0,011644 | -0,059174 | -0,10679 | 0,018459 |

**(0,8\|0,8):**

| | | | |
|---|---|---|---|
| 0.0029604 | -0.048653 | -0.0095123 | 0.00079541 |
| -0.048653 | 0.79959 | 0.15633 | -0.013072 |
| -0.0095123 | 0.15633 | 0.030565 | -0.0025558 |
| 0.00079541 | -0.013072 | -0.0025558 | 0.00021371 |

Auch im Zwei-dimensionalen erfüllen die Filterkoeffizienten für jeden der lokalen Filter die Eigenschaft, dass ihre Summe gleich dem vorgegebenen Gain g, d.h., gleich 1, ist (dritte Bedingung), dass ihr Schwerpunkt der zugehörigen Zwischenposition entspricht (vierte Bedingung), und dass die Summe ihrer Quadrate gleich einem konstanten Wert ist (erste Bedingung), der hier 0,694444 gleich $(5/6)^2$ ist. Dieser Wert entspricht auch dem Quadrat der Rauschverstärkung R, die dem Produkt des vorgegebenen Gains g der virtuellen zweiten Pixel relativ zum Gain der ersten Pixel (hier also 1) und dem Kehrwert der Wurzel der vorgegebenen relativen Pixelgröße w (hier also dem Kehrwert der Wurzel aus $(6/5)^2$, d.h., der Gesamtgrößenänderung der virtuellen zweiten Pixel relativ zu den ersten Pixeln) entspricht.

Die Filterung kann in einer digitalen Kamera 10 ausgeführt werden, z.B., in der beschriebenen Rechenvorrichtung 32. Die Rechenvorrichtung 32 kann dabei z.B. als Prozessor, als Mikroprozessor (MPU) oder Mikrocontroller (MCU), als digitaler Signalprozessor (DSP), als Field-Programmable-Gate-Array (FPGA), als Grafikprozessor (GPU), oder als applikationsspezifischer Schaltkreis (ASIC) ausgebildet sein. Die Rechenvorrichtung 32 kann auch in einen anderen Baustein mitintegriert sein, beispielsweise in den Bildsensor 31 oder in die Schnittstelle 33. Dadurch ist es z.B. auch möglich, einen Bildsensor 31 mit einer frei wählbaren Pixelgröße herzustellen oder einen entsprechenden Schnittstellenbaustein 33 für eine digitale Kamera.

Da sowohl die Synthesefunktion als auch die Filterkoeffizienten vom aktuellen Bildinhalt unabhängig sind, müssen sie nicht zur Berechnung jedes zweiten Pixels neu festgelegt werden, sondern es kann eine vorgezogene Festlegung erfolgen und die Filterwerte können in einem Speicher der Rechenvorrichtung 32, beispielsweise in einer Tabelle, gespeichert werden. Somit beschränkt sich die zur Laufzeit auszuführende mathematische Operation auf das Auslesen der Filterkoeffizienten aus einer Tabelle und auf ihre Anwendung in Form einer linearen Filterung. Diese lässt sich auf den oben genannten Ausführungen der Rechenvorrichtung 32 in geringer Rechenzeit oder mit geringem Ressourcenaufwand realisieren.

Die Rechenvorrichtung 32 kann auch ein Einstellelement zum Einstellen zumindest der relativen Pixelgröße (und gegebenenfalls des Gains der virtuellen zweiten Pixel relativ zu einem Gain der ersten Pixel) umfassen, wobei die Rechenvorrichtung 32 ausgebildet ist, die Filterkoeffizienten der lokalen Filter basierend auf der eingestellten relativen Pixelgröße (und gegebenenfalls dem eingestellten Gain) festzulegen. Wie vorstehend beschrieben, kann es vorteilhafterweise ebenfalls vorgesehen sein, dass auch die Auflösung des Ausgangsbildes (virtuelle zweite Pixel) über das Einstellelement einstellbar ist.

Weiterhin kann die Filterung auch nach der Ausgabe als elektronisches Signal 34 ausgeführt werden, beispielsweise in einem Teil einer technischen Anlage, auf einem Computer oder einem Smartphone.

Weitere Variationen der offenbarten Ausführungsformen können von einem die beanspruchte Erfindung praktizierenden Fachmann aus einer Betrachtung der Zeichnungen, der Beschreibung und der beigefügten Ansprüche verstanden und ausgeführt werden.

In den Ansprüchen schließen die Wörter "aufweisen" und "umfassen" nicht andere Elemente oder Schritte aus und der unbestimmte Artikel "in" schließt eine Mehrzahl nicht aus.

Eine einzelne Einheit oder Vorrichtung kann die Funktionen mehrerer Elemente durchführen, die in den Ansprüchen aufgeführt sind. Die Tatsache, dass einzelne Funktionen und/oder Elemente in unterschiedlichen abhängigen Ansprüchen aufgeführt sind, bedeutet nicht, dass nicht auch eine Kombination dieser Funktionen und/oder Elemente vorteilhaft verwendet werden könnte.

Die Bezugszeichen in den Ansprüchen sind nicht derart zu verstehen, dass der Gegenstand und der Schutzbereich der Ansprüche durch diese Bezugszeichen eingeschränkt wären.

Zusammengefasst wurde eine Bildverarbeitungseinrichtung zum Verarbeiten von Bilddaten eines Bildsensors mit einer regelmäßigen Anordnung von ersten Pixeln beschrieben, wobei die Bildverarbeitungseinrichtung ausgebildet ist, für zwei oder mehr virtuelle zweite Pixel gleicher Größe an unterschiedlichen Zwischenpositionen zwischen den ersten Pixeln jeweils einen Helligkeitswert zu bestimmen, wobei die Bestimmung des jeweiligen Helligkeitswertes eine Interpolation der Pixel einer mehrere der ersten Pixel umfassenden Nachbarschaftsumgebung der jeweiligen Zwischenposition mittels eines zugehörigen lokalen Filters umfasst, wobei jeder der lokalen Filter eine Mehrzahl von Filterkoeffizienten umfasst, wobei für zumindest einen der lokalen Filter mehr als einer der Filterkoeffizienten ungleich Null ist, und wobei die Summe der Quadrate der Filterkoeffizienten für jeden der lokalen Filter gleich einem konstanten Wert ist, der gemäß einer ersten Bedingung für alle lokalen Filter gleich ist.

## Patentansprüche

1. Bildverarbeitungseinrichtung zum Verarbeiten von Bilddaten eines Bildsensors (31) mit einer regelmäßigen Anordnung von ersten Pixeln, wobei die Bildverarbeitungseinrichtung ausgebildet ist, für zwei oder mehr virtuelle zweite Pixel gleicher Größe an unterschiedlichen Zwischenpositionen zwischen den ersten Pixeln jeweils einen Helligkeitswert zu bestimmen, wobei die Bestimmung des jeweiligen Helligkeitswertes eine Interpolation der Pixel einer mehrere der ersten Pixel umfassenden Nachbarschaftsumgebung der jeweiligen Zwischenposition mittels eines zugehörigen lokalen Filters umfasst, wobei jeder der lokalen Filter eine Mehrzahl von Filterkoeffizienten umfasst, wobei für zumindest einen der lokalen Filter mehr als einer der Filterkoeffizienten ungleich Null ist,
**dadurch gekennzeichnet, dass**
die Summe der Quadrate der Filterkoeffizienten für jeden der lokalen Filter gleich einem konstanten Wert ist, der gemäß einer ersten Bedingung für alle lokalen Filter gleich ist.

2. Bildverarbeitungseinrichtung nach Anspruch 1, wobei der konstante Wert gemäß einer zweiten Bedingung dem Quadrat einer Rauschverstärkung entspricht, wobei die Rauschverstärkung dem Produkt eines vorgegebenen Gains der virtuellen zweiten Pixel relativ zu einem Gain der ersten Pixel und dem Kehrwert der Wurzel einer vorgegebenen relativen Pixelgröße entspricht, wobei die relative Pixelgröße dem Verhältnis der Größe der virtuellen zweiten Pixel zu der Größe der ersten Pixel entspricht.

3. Bildverarbeitungseinrichtung nach Anspruch 2, wobei für jeden der lokalen Filter die Filterkoeffizienten zusätzlich eine dritte Bedingung erfüllen, dass die Summe der Filterkoeffizienten gleich dem vorgegebenen Gain ist.

4. Bildverarbeitungseinrichtung nach einem der Ansprüche 1 bis 3, wobei für jeden der lokalen Filter die Filterkoeffizienten zusätzlich eine vierte Bedingung erfüllen, dass der Schwerpunkt der Filterkoeffizienten der zugehörigen Zwischenposition entspricht.

5. Bildverarbeitungseinrichtung nach einem der Ansprüche 1 bis 4, wobei für jeden der lokalen Filter die Größe des lokalen Filters so gewählt ist, dass das jeweilige virtuelle zweite Pixel bei der Interpolation vollständig innerhalb des lokalen Filters gelegen ist.

6. Bildverarbeitungseinrichtung nach einem der Ansprüche 1 bis 5, wobei die Interpolation jeweils eine zwei-dimensionale Interpolation ist, und wobei jeder der lokalen Filter ein zwei-dimensionaler lokaler Filter ist, mittels dessen die zwei-dimensionale Interpolation ausgeführt wird, oder wobei jeder der lokalen Filter dem dyadischen Produkt von zwei ein-dimensionalen lokalen Filtern entspricht mittels derer die zwei-dimensionale Interpolation als zwei hintereinander ausgeführte ein-dimensionale Interpolationen ausgeführt wird.

7. Bildverarbeitungseinrichtung nach Anspruch 6, wobei der zwei-dimensionale Filter eine geradzahlige Größe in jeder der zwei Dimensionen aufweist, oder wobei die zwei ein-dimensionalen lokalen Filter eine geradzahlige Größe in der jeweils einen Dimension aufweisen.

8. Bildverarbeitungseinrichtung nach einem der Ansprüche 1 bis 7, wobei eine relative Seitenlänge der virtuellen zweiten Pixel, die dem Verhältnis der Länge einer Seite der virtuellen zweiten Pixel zu der Länge einer entsprechenden Seite der ersten Pixel entspricht, kleiner oder gleich 2 ist, und wobei für jeden lokalen Filter die Größe des lokalen Filters in einer Dimension in Richtung parallel zu der Seite gleich 4 ist.

9. Bildverarbeitungseinrichtung nach einem der Ansprüche 1 bis 8, wobei die Bildverarbeitungseinrichtung einen Speicher umfasst, in dem die Filterkoeffizienten der lokalen Filter zur Verwendung bei der Interpolation gespeichert sind.

10. Bildverarbeitungseinrichtung nach einem der Ansprüche 2 bis 9, wobei die Bildverarbeitungseinrichtung ein Einstellelement zum Einstellen zumindest der relativen Pixelfläche umfasst, wobei die Bildverarbeitungseinrichtung ausgebildet ist, die Filterkoeffizienten der lokalen Filter basierend auf der eingestellten relativen Pixelfläche festzulegen.

11. Bildverarbeitungseinrichtung nach Anspruch 10, wobei das Festlegen der Filterkoeffizienten ein Bestimmen von Filterkoeffizienten entsprechend einer Synthesefunktion umfasst, wobei die bestimmten Filterkoeffizienten vorzugsweise die erste und dritte Bedingung erfüllen, sowie ein Korrigieren der bestimmten Filterkoeffizienten oder der Synthesefunktion basierend auf einer zweiten und/oder einer dritten Korrekturfunktion derart, dass korrigierte Filterkoeffizienten erhalten werden, die zusätzlich die zweite Bedingung und/oder die vierte Bedingung erfüllen.

12. Digitalkamera (10), umfassend:

    - einen Bildsensor (31) mit einer regelmäßigen Anordnung von ersten Pixeln zur Erzeugung von Bilddaten; und
    - die Bildverarbeitungseinrichtung nach einem der Ansprüche 1 bis 11 zum Verarbeiten der Bilddaten des Bildsensors (31).

13. Bildverarbeitungsverfahren zum Verarbeiten von Bilddaten eines Bildsensors (31) mit einer regelmäßigen Anordnung von ersten Pixeln, wobei das Bildverarbeitungsverfahren für zwei oder mehr virtuelle zweite Pixel gleicher Größe an unterschiedlichen Zwischenpositionen zwischen den ersten Pixeln jeweils einen Helligkeitswert bestimmt, wobei die Bestimmung des jeweiligen Helligkeitswertes eine Interpolation der Pixel einer mehrere der ersten Pixel umfassenden Nachbarschaftsumgebung der jeweiligen Zwischenposition mittels eines zugehörigen lokalen Filters umfasst, wobei jeder der lokalen Filter eine Mehrzahl von Filterkoeffizienten umfasst, wobei für zumindest einen der lokalen Filter mehr als einer der Filterkoeffizienten ungleich Null ist,
    **dadurch gekennzeichnet, dass**
    die Summe der Quadrate der Filterkoeffizienten für jeden der lokalen Filter gleich einem konstanten Wert ist, der gemäß einer ersten Bedingung für alle lokalen Filter gleich ist.

14. Computervorrichtung, umfassend eine Recheneinheit, die zur Durchführung des Bildverarbeitungsverfahrens nach Anspruch 13 ausgestaltet ist.

15. Computerprogramm-Produkt, umfassend Codemittel zum Veranlassen einer Computervorrichtung zum Ausführen des Bildverarbeitungsverfahrens nach Anspruch 13, wenn das Computerprogramm-Produkt auf der Computervorrichtung ausgeführt wird.

**Claims**

1. Image processing apparatus for processing image data of an image sensor (31) with a regular arrangement of first pixels, wherein the image processing apparatus is configured to determine a brightness value for two or more virtual second pixels of the same size at different intermediate positions between the first pixels, wherein the determination of the respective brightness value comprises an interpolation of the pixels of a neighborhood of the respective intermediate position, the neighborhood comprising several of the first pixels, by means of an associated local filter, wherein each of the local filters comprises a plurality of filter coefficients, wherein for at least one of the local filters more than one of the filter coefficients is unequal to zero, **characterized in that** the sum of the squared filter coefficients for each of the local filters is equal to a constant value, which according to a first condition is the same for all local filters.

2. The image processing apparatus as defined in claim 1, wherein according to a second condition the constant value corresponds to the square of a noise gain, wherein the noise gain corresponds to the product of a predetermined gain of the virtual second pixels relative to a gain of the first pixels and the reciprocal of the square root of a predetermined relative pixel size, and wherein the relative pixel size corresponds to the ratio of the size of the virtual second pixels to the size of the first pixels.

3. The image processing apparatus as defined in claim 2, wherein for each of the local filters the filter coefficients additionally fulfill a third condition that the sum of the filter coefficients is equal to the predetermined gain.

4. The image processing apparatus as defined in any of claims 1 to 3, wherein for each of the local filters the filter coefficients additionally fulfill a fourth condition that the center of gravity of the filter coefficients corresponds to the associated intermediate position.

5. The image processing apparatus as defined in any of claims 1 to 4, wherein for each of the local filters the size of the local filter is selected such that the respective virtual second pixel is completely located within the local filter in the interpolation.

6. The image processing apparatus as defined in any of claims 1 to 5, wherein the interpolation is a two-dimensional interpolation, and wherein each of the local filters is a two-dimensional local filter by means of which the two-dimensional interpolation is performed, or wherein each of the local filters corresponds to the dyadic product of two one-dimensional local filters by means of which the two-dimensional interpolation is performed as two subsequently performed one-dimensional interpolations.

7. The image processing apparatus as defined in claim 6, wherein the two-dimensional filter has an even-numbered size in each of the two dimensions, or wherein the two one-dimensional local filters have an even-numbered size in the respective one dimension.

8. The image processing apparatus as defined in any of claims 1 to 7, wherein the relative side length of the virtual second pixels, which corresponds to the ratio of the length of a side of the virtual second pixels to the length of a corresponding side of the first pixels, is smaller or equal to 2, and wherein for each of the local filters the size of the local filter in a dimension in the direction parallel to the side is equal to 4.

9. The image processing apparatus as defined in any of claims 1 to 8, wherein the image processing apparatus comprises a storage in which the filter coefficients of the local filters are stored for use in the interpolation.

10. The image processing apparatus as defined in any of claims 2 to 9, wherein the image processing apparatus comprises an adjusting element for adjusting at least the relative pixel area, wherein the image processing apparatus is configured to set the filter coefficients of the local filters based on the adjusted relative pixel area.

11. The image processing apparatus as defined in claim 10, wherein the setting of the filter coefficients comprises a determination of filter coefficients according to a synthesis function, wherein the determined filter coefficients preferably fulfill the first and the third condition, as well as a correcting of the determined filter coefficients or the synthesis function based on a second and/or a third correction function in such a way that corrected filter coefficients are obtained that additionally fulfill the second condition and/or the fourth condition.

12. A digital camera (10), comprising:

- an image sensor (31) with a regular arrangement of first pixels for generating image data; and
- the image processing apparatus as defined in any of claims 1 to 11 for processing the image data of the image sensor (31).

**13.** An image processing method for processing image data of an image sensor (31) with a regular arrangement of first pixels, wherein the image processing method determines a brightness value for two or more virtual second pixels of the same size at different intermediate positions between the first pixels, wherein the determination of the respective brightness value comprises an interpolation of the pixels of a neighborhood of the respective intermediate position, the neighborhood comprising several of the first pixels, by means of an associated local filter, wherein each of the local filters comprises a plurality of filter coefficients, wherein for at least one of the local filters more than one of the filter coefficients is unequal to zero, **characterized in that**
the sum of the squared filter coefficients for each of the local filters is equal to a constant value, which according to a first condition is the same for all local filters.

**14.** A computer apparatus comprising a processing unit that is configured to perform the image processing method as defined in claim 13.

**15.** A computer program product comprising code means for causing a computer apparatus to perform the image processing method as defined in claim 13, when the computer program product is executed on the computer apparatus.


**Revendications**

**1.** Dispositif de traitement d'image destiné à traiter des données d'image d'un capteur d'image (31) avec un agencement régulier de premiers pixels, dans lequel ledit dispositif de traitement d'image est configuré pour déterminer respectivement une valeur de luminosité pour deux ou plusieurs deuxièmes pixels virtuels de la même taille sur différentes positions intermédiaires entre les premiers pixels, dans lequel la détermination de la valeur de luminosité respective comprend une interpolation des pixels d'un environnement de voisinage de la position intermédiaire respective, l'environnement de voisinage comprenant plusieurs des premiers pixels, au moyen d'un filtre local associé, dans lequel chacun des filtres locaux comprend une pluralité de coefficients de filtre, dans lequel, pour l'un au moins des filtres locaux, plus d'un des coefficients de filtre est différent de zéro, **caractérisé par le fait que** la somme des carrés des coefficients de filtre pour chacun des filtres locaux est égale à une valeur constante qui, selon une première condition, est la même pour tous les filtres locaux.

**2.** Dispositif de traitement d'image selon la revendication 1, dans lequel, selon une deuxième condition, la valeur constante correspond au carré d'un gain de bruit, dans lequel le gain de bruit correspond au produit d'un gain prédéterminé des deuxièmes pixels virtuels par rapport à un gain des premiers pixels et à la valeur inverse de la racine d'une taille de pixel relative prédéterminée, dans lequel la taille de pixel relative correspond au rapport de la taille des deuxièmes pixels virtuels à la taille des premiers pixels.

**3.** Dispositif de traitement d'image selon la revendication 2, dans lequel, pour chacun des filtres locaux, les coefficients de filtre remplissent en outre une troisième condition selon laquelle la somme des coefficients de filtre est égale au gain prédéterminé.

**4.** Dispositif de traitement d'image selon l'une quelconque des revendications 1 à 3, dans lequel, pour chacun des filtres locaux, les coefficients de filtre remplissent en outre une quatrième condition selon laquelle le centre de gravité des coefficients de filtre correspond à la position intermédiaire associée.

**5.** Dispositif de traitement d'image selon l'une quelconque des revendications 1 à 4, dans lequel, pour chacun des filtres locaux, la taille du filtre local est choisie de telle sorte que le deuxième pixel virtuel respectif est situé complètement à l'intérieur du filtre local lors de l'interpolation.

**6.** Dispositif de traitement d'image selon l'une quelconque des revendications 1 à 5, dans lequel l'interpolation est respectivement une interpolation bidimensionnelle, et dans lequel chacun des filtres locaux est un filtre local bidimensionnel au moyen duquel l'interpolation bidimensionnelle est effectuée, ou dans lequel chacun des filtres locaux correspond au produit dyadique de deux filtres locaux unidimensionnels au moyen desquels l'interpolation bidimensionnelle est effectuée en tant que deux interpolations unidimensionnelles effectuées l'une après l'autre.

7. Dispositif de traitement d'image selon la revendication 6, dans lequel le filtre bidimensionnel présente une taille paire dans chacune des deux dimensions, ou dans lequel les deux filtres locaux unidimensionnels présentent une taille paire dans ladite une dimension respective.

8. Dispositif de traitement d'image selon l'une quelconque des revendications 1 à 7, dans lequel une longueur de côté relative des deuxièmes pixels virtuels, qui correspond au rapport de la longueur d'un côté des deuxièmes pixels virtuels à la longueur d'un côté correspondant des premiers pixels, est inférieure ou égale à 2, et dans lequel, pour chacun des filtres locaux, la taille du filtre local dans une dimension dans la direction parallèle au côté est égale à 4.

9. Dispositif de traitement d'image selon l'une quelconque des revendications 1 à 8, dans lequel le dispositif de traitement d'image comprend une mémoire dans laquelle les coefficients de filtre des filtres locaux sont stockés pour être utilisés dans l'interpolation.

10. Dispositif de traitement d'image selon l'une quelconque des revendications 2 à 9, dans lequel le dispositif de traitement d'image comprend un élément de réglage destiné à régler au moins la surface de pixels relative, dans lequel le dispositif de traitement d'image est configuré pour déterminer les coefficients de filtre des filtres locaux sur la base de la surface de pixel relative réglée.

11. Dispositif de traitement d'image selon la revendication 10, dans lequel la détermination des coefficients de filtre comprend une détermination de coefficients de filtre selon une fonction de synthèse, dans lequel les coefficients de filtre déterminés remplissent de préférence les première et troisième conditions, ainsi qu'une correction des coefficients de filtre déterminés ou de la fonction de synthèse sur la base d'une deuxième et/ou d'une troisième fonction de correction de manière à obtenir des coefficients de filtre corrigés qui remplissent en outre la deuxième condition et/ou la quatrième condition.

12. Caméra numérique (10), comprenant:

    - un capteur d'image (31) avec un agencement régulier de premiers pixels pour générer des données d'image, et
    - ledit dispositif de traitement d'image selon l'une quelconque des revendications 1 à 11, destiné à traiter les données d'image du capteur d'image (31).

13. Procédé de traitement d'image destiné à traiter des données d'image d'un capteur d'image (31) avec un agencement régulier de premiers pixels, dans lequel le procédé de traitement d'image détermine respectivement une valeur de luminosité pour deux ou plusieurs deuxièmes pixels virtuels de la même taille sur différentes positions intermédiaires entre les premiers pixels, dans lequel la détermination de la valeur de luminosité respective comprend une interpolation des pixels d'un environnement de voisinage de la position intermédiaire respective, l'environnement de voisinage comprenant plusieurs des premiers pixels, au moyen d'un filtre local associé, dans lequel chacun des filtres locaux comprend une pluralité de coefficients de filtre, dans lequel pour l'un au moins des filtres locaux, plus d'un des coefficients de filtre est différent de zéro, **caractérisé par le fait que** la somme des carrés des coefficients de filtre pour chacun des filtres locaux est égale à une valeur constante qui, selon une première condition, est la même pour tous les filtres locaux.

14. Dispositif informatique comprenant une unité de calcul qui est configurée pour mettre en oeuvre le procédé de traitement d'image selon la revendication 13.

15. Produit de programme d'ordinateur comprenant des moyens de code pour amener un dispositif informatique à mettre en oeuvre le procédé de traitement d'image selon la revendication 13, lorsque le produit de programme d'ordinateur est exécuté sur ledit dispositif informatique.

Fig. 1

Fig. 2

43  44

# Fig. 3

80  82  81

83

ⓐ  ⓒ  ⓑ

# Fig. 4

Fig. 5a

Fig. 5b

EP 3 391 329 B1

Fig. 6

24

Stand der Technik

Fig. 7

Stand der Technik

Fig. 8

Fig. 9

Fig. 10

Fig. 11

Fig. 12

Fig. 13

Fig. 14

Fig. 15

Fig. 16

Fig. 17

Fig. 18

Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0940029 A
- US 6462779 B
- US 7567723 B
- US 7286721 B

- EP 0710925 A2
- EP 0532221 A2
- EP 0969443 A1

**In der Beschreibung aufgeführte Nicht-Patentliteratur**

- **JAMES R. JANESICK.** Scientific Charge-Coupled Devices. 2001